# EUROPÄISCHE PATENTSCHRIFT

(11) **EP 0 757 530 B1**
(45) Veröffentlichungstag und Bekanntmachung des Hinweises auf die Patenterteilung: **10.06.1998**
(21) Anmeldenummer: 95919364.0
(22) Anmeldetag: 28.04.1995
(51) Int. Cl.: A47J 36/16, A47J 36/20, A47J 43/07

(54) **KÜCHENMASCHINE MIT EINEM RÜHRGEFÄSS UND EINEM ANTRIEB FÜR EIN RÜHRWERK IN DEM RÜHRGEFÄSS**
FOOD PROCESSOR WITH A MIXING VESSEL AND A DRIVE MECHANISM FOR AN AGITATOR IN THE MIXING VESSEL
ROBOT MENAGER COMPORTANT UN BAC A AGITATION ET UN MECANISME D'ENTRAINEMENT DE L'AGITATEUR DU BAC

(30) Priorität: 28.04.1994 DE 4414823
(43) Veröffentlichungstag der Anmeldung: 12.02.1997
(73) Patentinhaber: Vorwerk & Co. Interholding GmbH, 42275 Wuppertal (DE)
(72) Erfinder: KEMKER, Uwe, D-42105 Wuppertal (DE); DÖRNER, Stefan, D-42697 Solingen (DE); LAPP, Oliver, D-42287 Wuppertal (DE)
(74) Vertreter: Müller, Enno, Dipl.-Ing.
(86) Internationale Anmeldenummer: EP9501636
(87) Internationale Veröffentlichungsnummer: WO9529615

(56) Entgegenhaltungen:
- BE-A- 460 483
- DE-U- 8 709 400
- FR-A- 2 326 171
- US-A- 2 097 478
- US-A- 5 275 094

## Beschreibung

Die Erfindung betrifft eine Küchenmaschine mit einem Rührgefäß und einem Antrieb für ein Rührwerk in dem Rührgefäß, wobei das Rührgefäß in seinem unteren Bereich aufheizbar ist, wobei das Rührgefäß durch einen Einsatzdeckel abgedeckt ist (siehe die FR-A-2 326 171).

Es sind Küchenmaschinen bekannt, welche einen Antrieb für ein Rührwerk in einem Rührgefäß aufweisen. Derartige Küchenmaschinen dienen beispielsweise zur Herstellung von Teigen oder ähnlichem, beispielsweise zur Herstellung von Teigwaren. Die in das Rührgefäß eingebrachten Zutaten werden mittels des angetriebenen Rührwerkes verrührt. Je nach Ausbildung des Rührwerks können die eingebrachten Zutaten auch beispielsweise zu einem Teig oder ähnlichem verknetet werden.

Es ist weiterhin beispielsweise aus der DE-A-35O7276 bekannt, derartige Küchenmaschinen mit einer Heizung auszustatten. Letztere wirkt bevorzugt im unteren Bereich des Rührgefäßes, welches hierdurch aufheizbar ist. Derartig ausgestaltete Küchenmaschinen können beispielsweise zur Herstellung von Suppen, Soßen oder ähnlichem genutzt werden. Während der Heizphase wird nunmehr die in dem Rührgefäß befindliche Suppe oder Soße verrührt, was zu einer optimalen Vermengung und zu einer verbesserten Aromatisierung der Speise führt.

Aufgabe der vorliegenden Erfindung ist es, eine gattungsgemäße Küchenmaschine in einfacher Weise weiter zu gestalten.

Gelöst ist diese Aufgabe durch die im Anspruch 1 angegebene Erfindung.

Die Unteransprüche 2-9 stellen vorteilhafte Weiterbildungen dar.

Zufolge diese Ausgestaltung ist eine Küchenmaschine gegeben, welche neben den genannten Funktionen, wie Rühren und Aufheizen noch die Möglichkeit eines Garens von Lebensmitteln aufweist.

Dies ist dadurch erreicht, daß auf dem Einsatzdeckel ein Aufsatz angeordnet ist, der einen durchbrochenen Boden aufweist zum Zubereiten durch Dünsten von Lebensmitteln, wobei die Durchbrüche in einer Gargut-Auflage des Aufsatzbodens ausgebildet sind und Kondensat oder entstehende Feuchtigkeit in das Rührgefäß zurückgeleitet wird.

Durch ein Aufheizen eines in dem Rührgefäß befindlichen Suds werden aromatisierte Dämpfe freigesetzt. Diese Wirkung wird noch verstärkt, wenn das in dem Rührgefäß befindliche Rührwerk eingeschaltet ist. Die aromatisierten Dämpfe können aufgrund der genannten Ausbildung durch die Durchbrüche des Aufsatzbodens treten und hiernach das in dem Aufsatz angeordnete, zu dünstende Lebensmittel umspülen. Die genannten Lebensmittel bzw. das Gargut nehmen hierbei Aromastoffe des Dampfes auf. Das bei dem Dünsten entstehende Kondensat in dem Aufsatz kann wiederum durch die im Aufsatzboden angeordneten Durchbrüche zurück in das Rührgefäß geleitet werden. Vorteilhaft ist hierbei vor allem, daß die bei einem Dünsten entstehende Feuchtigkeit, insbesondere die austretende Lebensmittelfeuchte ebenfalls in das Rührgerät auf dem genannten Wege zurückgeleitet werden. Der in dem Rührgefäß befindliche Sud wird somit wiederum mit Aromastoffen des Gargutes angereichert. Das eingeschaltete Rührwerk bewirkt eine optimale Vermengung der zurückgeleiteten Feuchtigkeit bzw. des Kondensats. Eine derartig ausgebildete Küchenmaschine ist besonders vorteilhaft dann einzusetzen, wenn beispielsweise Soßen oder dergleichen mit Gewürzaromen verfeinert werden sollen, ohne daß die Soße oder dergleichen direkt mit den Gewürzen in Kontakt tritt. Hierzu können die Gewürze in dem Aufsatz angeordnet sein, womit durch das Dünsten die Aromastoffe aus den Gewürzen herauskondensieren. Dieses Kondensat tropft folglich durch die Durchbrüche des Aufsatzbodens zurück in das Rührgefäß. Die dort vorhandene Soße wird mit den gewünschten Aromen verfeinert. Das ständig drehende Rührwerk bewirkt eine gleichmäßige Verteilung der Aromastoffe. In einer vorteilhaften Weiterbildung des Erfindungsgegenstandes ist vorgesehen, daß der Aufsatzboden einen zentralen, undurchbrochenen Bereich aufweist. Bedingt durch diese Ausgestaltung ist eine Fläche gebildet, welche es erlaubt, auch beispielsweise kleinkörnige Gewürze oder dergleichen in den Aufsatz einzubringen. Die Durchbrechungen des Aufsatzbodens sind so dimensioniert, daß übliche Lebensmittel oder großflächige Gewürze nicht durch diese in das Rührgefäß fallen können, jedoch wiederum so groß ausgelegt, daß auch dickflüssiges Kondensat bzw. dickflüssige entstehende Feuchtigkeit zurückgeleitet werden kann. Kleinkörnige Gewürze wie beispielsweise Salz, Pfeffer oder ähnliche könnten jedoch durch diese Durchbrüche in das Rührgefäß fallen. Diese Gewürze können durch die genannte Ausbildung in dem undurchbrochenen Bereich des Aufsatzbodens angeordnet werden. Auch in diesem Bereich werden die Gewürze/Lebensmittel von den aufsteigenden Dämpfen umspült. Wie bereits erwähnt, wird bevorzugt der undurchbrochene Bereich zentral in dem Aufsatzboden angeordnet, was auch hier zu einer optimalen Umspülung der dort aufgelegten Gewürze oder Lebensmittel führt. Der Aufsatz kann weiterhin beispielsweise topfartig ausgebildet sein. Es ist hierbei denkbar, den Aufsatz kegelstumpfförmig auszubilden, wobei sich der Aufsatz nach oben hin aufweitet. Weiterhin ist denkbar, einen solchen topfartigen Aufsatz, bezüglich seiner, Grundfläche, oval auszugestalten und mit Handgriffen zu versehen, wobei diese bevorzugt in Verlängerung der Längsache des ovalen Aufsatzes angeordnet sind. In einer bevorzugten Ausgestaltung weist der oval ausgebildete Aufsatz ein Längenverhältnis von Längsachse zur Querachse von ca. 1,2:1 bis 1,5:1 auf. Ein derart ausgebildeter Aufsatz ist zum Befüllen nach oben hin offengehalten und kann mittels der Handgriffe auf ein eingangs beschriebenes Rührgefäß gesetzt bzw. von diesem abgehoben werden. In einer bevorzugten Anordnung ist weiterhin vorgesehen, daß zwischen dem Aufsatz und dem Rührgefäß ein Einsatzdeckel angeordnet ist, der eine im wesentlichen zentrale Großöffnung aufweist. Dieser Zwischendeckel ist vorteilhafterweise der Kontur des Rührgefäßes angepaßt und auf diesem angeordnet. Auf letzterem wird der Aufsatz gestellt. Das während des Dämpfungsvorganges entstehende Kondensat bzw. die entstehende Feuchtigkeit wird, wie bereits erwähnt, durch die Durchbrüche in dem Aufsatzboden zurückgeleitet. Nach Durchtritt durch die Durchbrüche des Aufsatzbodens gelangt das Kondensat bzw. die entstehende Feuchtigkeit auf die Oberfläche des Einsatzdeckels. Dieser ist bevorzugt mit einem zu der Großöffnung hin gerichteten Gefälle versehen, womit die außerhalb des Großöffnungsbereiches abtropfende Feuchtigkeit zu der Großöffnung geleitet wird. Von hier aus gelangt letztere in das Rührgefäß. Die zentrale Anordnung der Großöffnung des Einsatzdeckels bewirkt zudem eine zentrale Rückführung des Kondensats bzw. der entstehenden Feuchtigkeit in Richtung auf das ebenfalls zentral angeordnete Rührwerk. Die zentrale Großöffnung ist in einer Projektion dem zentralen undurchbrochenen Bereich des Aufsatzbodens zugeordnet, wodurch sich der vorteilhafte Effekt ergibt, daß der aus dem Rührgefäß aufsteigende Dampf zunächst im wesentlichen auf den undurchbrochenen Bereich trifft und von dort zum Rand des Aufsatzes geleitet wird. Bei einem Zwischenschalten eines mit einer zentralen Großöffnung versehenen Einsatzdeckels zwischen dem Rührgefäß und dem Aufsatz wirkt sich der zentrale undurchbrochene Bereich des Aufsatzes positiv aus, da ansonsten der zentral aufsteigende Dampf das direkt darüber angeordnete Gargut beaufschlagen würde. Dies hätte zur Folge, daß das Gargut im Mittelbereich früher als das in den Randzonen angeordnete gar wäre. Vorteilhaft an dieser Ausbildung ist auch, daß nach Abnahme des Aufsatzes das Rührgefäß und besonders das Rührwerk nicht sofort offenliegt. Um eine verbesserte Wirkung während des Garvorganges zu erzielen, wird vorgeschlagen, daß der Aufsatz mit einem Deckel überdeckt ist, wobei der Deckel Durchbrechungen aufweist und eine Auflagefläche für Gargut ausgebildet ist. Der Deckel überdeckt somit den Garraum, womit die in den Aufsatz eintretenden und den Garraum durchflutenden aromatisierten Dämpfe nicht unkontrolliert entweichen können. Es ist somit eine optimale Umspülung der in dem Aufsatz eingelegten Lebensmittel oder ähnlichem gegeben. Um jedoch einem erhöhtem Überdruck entgegenzuwirken, weist der Deckel Durchbrechungen auf, durch welche Dämpfe austreten können. Diese Durchbrechnungen sind jedoch größen- und mengenmäßig so dimensioniert, daß nur ein Teil der in den Aufsatz eintretenden aromatisierten Dämpfe durch die Deckel-Durchbrechungen treten können. Im Vergleich zum Aufsatzboden, der bis auf den genannten zentralen, undurchbrochenem Bereich nahezu auf seiner gesamten Fläche mit Durchbrüchen versehen ist, ist der Deckel lediglich mit wenigen reihenförmig angeordneten Durchbrüchen ausgestattet. Bevorzugt wird hierbei eine Anordnung von zwei sich gegenüberliegenden Reihen von Durchbrüchen. Letzere können zusätzlich noch dazu genutzt werden, auf der Auflagefläche des Deckels angeordnetes Gargut mit aromatisierten Dämpfen zu umspülen. Es ist hierdurch eine schichtartige Anordnung von Auflageflächen für zu dünstende Lebensmittel geschaffen. Auch wie bei dem zuvor bereits beschriebenen Aufsatz können bei auf dem Deckel aufliegenden Lebensmitteln Kondensat bzw. entstehende Feuchtigkeit durch die Durchbrüche in den Aufsatz und von dort in das Rührgefäß zurückgeleitet werden. Diese Ausbildung ist besonders dann von Vorteil, wenn verschiedenartige Lebensmittel durch denselben Sud gedünstet werden sollen, ohne daß die Lebensmittel miteinander in Kontakt geraten können. Weiterhin kann der Deckel an seiner Unterseite, d.h. an der dem Aufsatz zugewandten Seite, mit einem beispielsweise ringförmigen Abtropfvorsprung versehen sein. Dieser, nach unten gerichtete Vorsprung bewirkt ein Abtropfen des sich an der Unterseite des Deckels ansammelnden Kondensats zurück in den Aufsatz. Die Außenkontur des Deckels entspricht bevorzugt der des Aufsatzes. Weiterhin wird vorgeschlagen, den Deckel ebenfalls mit Handgriffen zu versehen, welche bei auf dem Aufsatz aufgesetztem Deckel deckungsgleich zu den Handgriffen des Aufsatzes liegen. Vorteilhafterweise kann der Deckel auch als Untersetzer für den Aufsatz dienen, beispielsweise zum Abstellen des Aufsatzes auf eine Arbeitsfläche. Hier weist der Aufsatz in seinem unteren, dem Aufsatzboden zugewandten Bereich eine der Innenkontur des Abtropfvorsprunges des Deckels entsprechende Außenkontur auf. Wird der Deckel als Untersetzer genutzt, so wird dieser mit seiner ursprünglichen Oberseite nach unten auf die Ablage oder dergleichen gelegt, womit der besagte ringförmige Abtropfvorsprung nach oben zeigt. Der Aufsatz wird nunmehr auf den Deckel gestellt, derart, daß die Außenkontur des Bodenbereiches des Aufsatzes von dem ringförmigen Abtropfvorsprung umfaßt wird. Etwaige noch aus dem Aufsatz durch die Durchbrechnungen des Aufsatzbodens heraustretende Flüssigkeit wird somit innerhalb des durch den ringförmigen Abtropfvorsprung gebildeten Bereiches aufgefangen. Es ist des weiteren vorgesehen, daß der Deckel einen inneren, nach oben gewölbten Mittelbodenbereich aufweist. Im Garbetrieb bewirkt dieser domartige Mittelbodenbereich ein gezieltes Ablaufen von Kondensat bzw. entstehender Feuchtigkeit an der Oberfläche des Deckels in die randaußenseitigen Bereiche. Beim Einsatz des Deckels als Untersetzer bewirkt diese Ausgestaltung eine Vergrößerung des Aufnahmevolumens im Bereich des ringförmigen Abtropfvorsprunges, bei auf diesem Deckel abgestelltem Aufsatz. Die Grundfläche des nach oben gewölbten Mittelbodenbereiches ist konturgleich der wesentlichen Außenkontur des Deckels. Dies bedeutet bei einer, wie zuvor beschriebenen, ovalen Ausgestaltung des Aufsatzes und des Deckels eine entsprechend ovale Grundfläche des Mittelbodenbereiches. Vorteilhafterweise sind die Durchbrechungen einem Fußbereich des Mittelbodenbereiches zugeordnet. Die von dem erhöhten Mittelbodenbereich ablaufende Feuchtigkeit tritt auf direktem Wege durch die Durchbrechnungen in den Aufsatz. Das Sammeln und Zurückleiten von Kondensat bzw. entstehender Feuchtigkeit von auf der Auflagefläche des Deckels angeordnetem Gargut wird dadurch optimiert, daß der Deckelrand umfangseitig, ausgehend vom Fußbereich einen ansteigenden Abschnitt aufweist, der in einen hochgezogenen Umfangsrand übergeht. Letzterer schließt die Auflagefläche ab, womit einerseits ein sicheres Ansammeln des Kondensats bzw. der entstehenden Feuchtigkeit gegeben ist und andererseits das auf der Auflagefläche liegende Gargut gegen Herabfallen gesichert ist. Der vom Fußbereich ausgehende, ansteigende Abschnitt bewirkt ein Abfließen des Kondensats bzw. der entstehenden Feuchtigkeit vom Umfangsrand weg hin zu den Durchbrechungen, welche, wie bereits erwähnt, im Fußbereich des erhöhten Mittelbodenbereiches angeordnet sind. Es ist somit eine Rinne gebildet, in welcher die Durchbrechungen vorgesehen sind. Wird einem solchen wannenartigen Deckel an seiner Unterseite der zuvor erwähnte ringförmige Abtropfvorsprung zugeordnet, so ist letzterer so bemessen, daß die Durchbrechungen des Deckels außerhalb des ringförmig umschlossenen Bereiches des Abtropfvorsprunges positioniert sind. Als besonders vorteilhaft erweist es sich, daß der Deckel unterseitig einen umlaufenden Dichtungsvorsprung aufweist, zur dichtenden Zusammenwirkung mit einem Rand des Aufsatzes. Hierdurch wird ein unkontrollierter Austritt der aromatisierten Dämpfe verhindert. Letztere durchspülen vielmehr den durch den mit dem umlaufenden Dichtungsvorsprung versehenen Deckel abgeschlossenen Garraum des Aufsatzes. Die Dämpfe können nur durch die in dem Deckel angeordneten Durchbrüche gezielt entweichen, um einerseits einen zu hohen Überdruck im Garraum zu verhindern und andererseits auf der Auflagefläche des Deckels vorgesehenes Gargut zu bedampfen. Bevorzugt wird hierbei eine Ausbildung des Deckels, bei welcher der Deckel eine nahezu gleiche Außenkontur wie der Aufsatz aufweist. Der umlaufende Dichtungsvorsprung ist an der Unterseite des Deckels entlang dessen Randes mit Abstand zu diesem angeordnet. Der Deckel wird so auf den Aufsatz gesetzt, daß der über den Dichtungsvorsprung hinausragende Rand sich auf dem Rand des Aufsatzes abstützt und sich der Dichtungsvorsprung innenseitig an den Rand des Aufsatzes anlegt. Es wird weiterhin vorgeschlagen, bei Einsatz eines mit Handgriffen versehenen Aufsatzes und eines ebenfalls mit Handgriffen ausgestatteten Deckels den umlaufenden Dichtungsvorsprung entlang der Außenkontur des Deckels anzuordnen. Dies bedeutet, daß der Dichtungsvorsprung von einem Randbereich des Deckels ausgehend sich durch den Bereich der Handgriffe erstreckt. Dies kann beispielsweise in Form von unterseitig angeordneten Stegen realisiert sein, welche einen dichtenden Abschluß zwischen den Handgriffen des Aufsatzes und des Deckels bewirken. Wie bereits erwähnt, kann der Deckel an seiner Unterseite mit einem bspw. ringförmigen Abtropfvorsprung versehen sein. Dies kann dadurch gelöst sein, daß der Deckel unterseitig einen inneren, zu dem Dichtungsvorsprung beabstandeten Abtropfrand in Form einer umlaufenden Rippe ausbildet. Letztere ist bevorzugt in einer Projektion zum Fußbereich des Mittelbodenbereiches angeordnet. Aufsteigende Dämpfe können somit kontrolliert nach einer Kondensation wieder zurück in den Aufsatz tropfen. In einer alternativen Ausgestaltung wird vorgeschlagen, daß die Durchbrechungen des Deckels teilweise in die Kontur der Rippe eingelassen sind. Bedingt durch diese Ausgestaltung ist gewährleistet, daß auf dem Aufsatzdeckel entstehendes Kondensat durch die Durchbrechungen direkt in den Bereich des Abtropfrandes gelangen, von welchem aus dieses abtropfen kann. Die Durchbrechungen des Deckels sind in vorteilhafter Weise so positioniert, daß der Abtropfrandkamm auch im Bereich der Durchbrechungen unbeeinflußt ist. Der Abtropfrand kann hierzu bspw. einen trapezförmigen Querschnitt aufweisen, wobei die Durchbrechungen des Deckels eine Trapezfläche des Abtropfrandes durchdringen. Etwaiges durchtretendes Kondensat gelangt somit sofort in den Bereich des Abtropfrandkammes, von welchem ein gezieltes Abtropfen in den Aufsatz erfolgt. Es ist des weiteren von Vorteil, daß zwischen dem Aufsatz und dem Deckel ein Zwischeneinsatz angeordnet ist. In diesem Zwischeneinsatz können weitere Lebensmittel, welche gedünstet werden sollen, eingebracht werden. Es ist somit ein Garen von Lebensmitteln in drei Schichten ermöglicht. Hierzu weist der Boden des Zwischeneinsatzes entsprechende Durchbrüche auf, welche bevorzugt in gleicher Weise wie die des Aufsatzbodens ausgebildet und angeordnet sind. Dies bedeutet, daß auch hier ein zentraler, undurchbrochener Bereich vorgesehen sein kann. Um auch bei Einsatz eines derartigen Zwischeneinsatzes eine optimale Abdichtung des gesamten Garraumes zu gewährleisten, ist vorgesehen, daß ein Rand des Zwischeneinsatzes sich innerhalb des umlaufenden Dichtungsvorsprunges des Deckels befindet. Die Abdichtung des Garraumes bzw. das Zusammenwirken des umlaufenden Dichtungsvorsprunges mit einem Rand des Aufsatzes ist durch den Einsatz eines Zwischeneinsatzes nicht vermindert. Bei einer wie zuvor beschriebenen Ausbildung von Aufsatz und Deckel mit Handgriffen kann der Zwischeneinsatz ebenfalls mit Handgriffen versehen sein, mit welchen sich der Zwischeneinsatz auf einer Oberseite der Aufsatzhandgriffe abstützt. Hierbei wirkt sich besonders vorteilhaft aus, daß der umlaufende Dichtungsvorsprung des Deckels sich auch durch den Bereich der Handgriffe erstreckt. Die an der Unterseite der Deckelhandgriffe angeordneten Dichtungsvorsprung-Abschnitte bewirken eine optimale Abdichtung in diesem Bereich. Die Deckelhandgriffe überdecken den Bereich der Zwischeneinsatz-Handgriffe, wobei sich die dort angeordneten Dichtungsabschnitte dichtend gegen die Oberseite der Aufsatzhandgriffe abstützen. In einer weiteren Ausgestaltung kann vorgesehen sein, daß der Zwischeneinsatz Durchströmöffnungen in bezug auf die Innenfläche des Aufsatzes beläßt. Hierzu kann der Zwischeneinsatz außenseitig in seinem Wandbereich Vorsprünge aufweisen, mit welchen sich der Zwischeneinsatz an der Innenfläche des Aufsatzes abstützt. Zwischen diesen Vorsprüngen verbleiben Durchströmöffnungen, womit gewährleistet ist, daß aufsteigende Dämpfe auch an den Außenseiten vorbei in den oberen Teil des durch den Zwischeneinsatz abgegrenzten Aufsatzes strömt und die dort angeordneten Speisen erhitzt. Es wird eine Ausgestaltung bevorzugt, bei welcher der Rand des Zwischeneinsatzes wellenförmig gestaltet ist derart, daß sich die Wellenberge und Wellentäler im wesentlichen vertikal erstrecken. Der Zwischeneinsatz stützt sich demnach im Bereich der Wellenberge an der Innenfläche des Aufsatzes ab, womit im Bereich der Wellentäler die Durchströmöffnungen belassen sind. Vorteilhafterweise ist die wellenförmige Ausgestaltung des Randes auf dem ganzen Umfang des Zwischeneinsatzes vorgesehen. Vorteilhafterweise ist der wellenförmig gestaltete Rand des Zwischeneinsatzes derart bemessen, daß eine Wellenhöhe etwa einer Wandstärke und eine Wellenlänge etwa dem vier- bis fünffachen der Wandstärke entspricht. Wie bereits erwähnt, kann der Deckel unterseitig einen umlaufenden Dichtungsvorsprung aufweisen. Hierzu wird in einer Weiterbildung vorgeschlagen, daß ein Teilabschnitt des Dichtungsvorsprunges als ein Dichtungsstreifen ausgebildet ist und daß der Deckel nach innen versetzt und beabstandet zu dem Dichtungsstreifen eine Aufnahmeraum-Abschlußwand aufweist, welche Durchbrechungen besitzt zur Einschachtelung des Griffes des Zwischeneinsatzes. Der Dichtungsvorsprung des Deckels setzt sich im Bereich der Deckelgriffe in Form von Dichtungsstreifen fort. Zur Bildung eines Aufnahmeraumes, in welchem in zusammengesetztem Zustand zumindest ein Teil des Zwischeneinsatzgriffes einliegt, zu bilden, ist eine zu den Dichtungsstreifen beabstandete und nach innen versetzte Aufnahmeraum-Abschlußwand vorgesehen. Letztere weist zum Durchtritt des Zwischeneinsatzgriffes Durchbrechungen auf. Diese Durchbrechungen werden im zusammengesetzten Zustand nahezu vollständig vom Griffquerschnitt des Zwischeneinsatzes verschlossen. Bedingt durch diese Ausgestaltung ist die Abdichtung des Garraumes zu den Außenseiten verbessert. Heiße Dämpfe gelangen nur in geringen Mengen in den gebildeten Aufnahmeraum zwischen dem Dichtungsstreifen und der Abschlußwand, wodurch gewährleistet ist, daß die Handgriffe, insbesondere die des Deckels, nicht zu sehr aufgeheizt werden. Um diesen Effekt weiterhin zu erhöhen, kann vorgesehen sein die Abdichtung labyrinthartig auszugestalten derart, daß an dem Handgriff des Aufsatzes eine Abschlußrippe ausgebildet ist zur Außenanlage an den Dichtungsstreifen. Der aufgesetzte Deckel stützt sich im Bereich der Aufsatzhandgriffe mittels dem Dichtungsstreifen auf diesen ab. Eine weitere Abstützung erfolgt im Bereich der Aufnahmeraum-Abschlußwände. Die Dichtungsstreifen werden von einer oberseitig an dem Handgriff des Aufsatzes angeordneten Abschlußrippe außenseitig abgedeckt, womit eine labyrinthartige Abdichtung des Garraumes im Bereich der Handgriffe erzielt ist. Um dem Benutzer eine Orientierungshilfe beim Aufsetzen des Aufsatzes auf das Rührgefäß zu bieten, kann vorgesehen sein, daß der Aufsatz Registerflächen ausbildet, die mit entsprechenden Gegen-Registerflächen an dem Einsatzdeckel zusammenwirken. Die Registerflächen des Aufsatzes sind hierbei bevorzugt im Bereich des Aufsatzbodens angeordnet und beispielsweise in Form von Einwölbungen ausgebildet. Diese Einwölbungen wirken mit entsprechenden Auswölbungen beispielsweise in Form von Nasen des Einsatzdeckels zusammen. Neben dem Vorteil einer Orientierungshilfe für den Benutzer bieten diese Registerflächen auch einen Schutz gegen Verdrehen des Aufsatzes auf dem Einsatzdeckel. Vor allem bei, wie bereits erwähnt, ovalem Grundriß des Aufsatzes kann bei Erschütterung ein Verdrehen des Aufsatzes auf dem Einsatzdeckel erfolgen, was zugleich, bedingt durch die ovale Ausgestaltung, ein Herauswandern und Abheben des Aufsatzes zur Folge hat. Dies ist durch die genannten Registerflächen erfolgreich verhindert, da diese eine Drehsicherung darstellen. Als besonders vorteilhaft erweist sich hierbei, daß eine Registerfläche stufenartig ausgebildet ist. Schließlich ist in einer vorteilhaften Weiterbildung vorgesehen, daß eine Registerfläche sich senkrecht zu einer Hauptachse des Aufsatzes erstreckt. Bei einer erwähnten ovalen Ausgestaltung des Aufsatzes und einer entsprechenden Ausgestaltung des Einsatzdeckels erstreckt sich eine Registerfläche des Aufsatzes senkrecht zu der längeren Achse der ovalen Grundfläche. Vorteilhafterweise ist die Gegen-Registerfläche an dem Einsatzdeckel ebenfalls entsprechend senkrecht zu der Längsachse der ovalen Auflagefläche des Einsatzdeckels ausgerichtet. Um ein unbeabsichtigtes Abheben des Aufsatzes vom Einsatzdeckel zu verhindern, bspw. durch Kinder, kann vorgesehen sein, daß die Registerflächen an dem Aufsatz als muldenartige Hinterschneidungen ausgebildet sind. Diese muldenartige Hinterschneidungen können mit entsprechenden Gegen-Registerflächen zusammenwirken, wobei bei aufgesetztem Aufsatz auf den Einsatzdeckel ein Hintergriff gebildet ist, welcher ein Abkippen des Aufsatzes verhindert. Hierzu kann vorgesehen sein, daß zumindest eine Gegen-Registerfläche als ein nasenartiger Registervorsprung ausgebildet ist. Bevorzugt ist hierbei eine Ausgestaltung, bei welcher der Hintergriff gegenüberliegend zu dem Rührgefäßgriff ausgebildet ist, wozu der Einsatzdeckel des Rührgefäßes eine nach innen weisende Nase und der Aufsatz eine entsprechend ausgebildete Mulde aufweist.

Die Erfindung betrifft des weiteren ein Verfahren zum Zubereiten von Speisen in einer als Küchenmaschine ausgebildeten Vorrichtung nach Anspruch 1, welche ein in einem Rührgefäß aufgenommenes Rührwerk und ein Heizwerk zum Garen der Speisen aufweist. Gemäß der Erfindung, wie sie im Anspruch 10 angegeben ist, wird vorgeschlagen, daß die aus dem Rührgefäß aufsteigenden Dämpfe durch einen Einsatzdeckel hindurch in ein Aufsatzgefäß geleitet werden unter Umströmung von in dem Aufsatzgefäß aufgenommenem Gargut und in Form von Kondensat nach weiterer Durchsetzung des Gargutes in umgekehrter Richtung zurück in das Rührgefäß geleitet werden.

Durch ein Aufheizen eines in dem Rührgefäß befindlichen Suds werden aromatisierte Dämpfe freigesetzt. Diese Wirkung wird noch verstärkt, wenn das in dem Rührgefäß befindliche Rührwerk eingeschaltet ist. Die aromatisierten Dämpfe steigen in den Aufsatz auf und umspülen die dort angeordneten, zu dünstenden Lebensmittel. Letztere nehmen hierbei Aromastoffe des Dampfes auf. Das beim Dünsten entstehende Kondensat in dem Aufsatz wird nach weiterer Durchsetzung des Gargutes in umgekehrter Richtung zurück in das Rührgefäß geleitet. Der in dem Rührgefäß befindliche Sud wird somit wiederum mit Aromastoffen des Gargutes angereichert. Das eingeschaltete Rührwerk bewirkt eine optimale Vermengung der zurückgeleiteten Feuchtigkeit bzw. des Kondensats. In einer vorteilhaften Weiterbildung ist vorgesehen, daß die Dämpfe nach einem ersten Durchsetzen des Gargutes gegen einen im wesentlichen geschlossenen Aufsatzdeckel geleitet werden zur Einleitung der Kondensation. Mittels dieses Aufsatzdeckels ist ein Garraum gebildet. Der sich an dem Deckel abschlagende Dampf kondensiert und tropft von dort wieder zurück in den Aufsatz bzw. in das Rührgefäß.

Nachstehend ist die Erfindung anhand zeichnerisch veranschaulichter Ausführungsbeispiele näher erläuert. Es zeigt:
- Fig. 1: eine erfindungsgemäße Küchenmaschine mit einem Rührgefäß, mit einem, mittels eines Deckels verschlossenen, aufgesetzten Aufsatz, einer ersten Ausführungsform, in einer Seitenansicht,
- Fig. 2: die Küchenmaschine gemäß Fig. 1, jedoch in Vorderansicht,
- Fig. 3: eine Draufsicht auf die Küchenmaschine, jedoch bei abgenommenem Aufsatz und Deckel, mit Blick auf einen Einsatzdeckel des Rührgefäßes,
- Fig. 4: eine Einzeldarstellung des Aufsatzes, in einer Seitenansicht,
- Fig. 5: die Vorderansicht des Aufsatzes,
- Fig. 6: die Draufsicht des Aufsatzes,
- Fig. 7: den Schnitt gemäß der Linie VII-VII in Fig. 6,
- Fig. 8: den Schnitt gemäß der Linie VIII-VIII in Fig. 6,
- Fig. 9: eine Einzeldarstellung des Deckels in einer Seitenansicht,

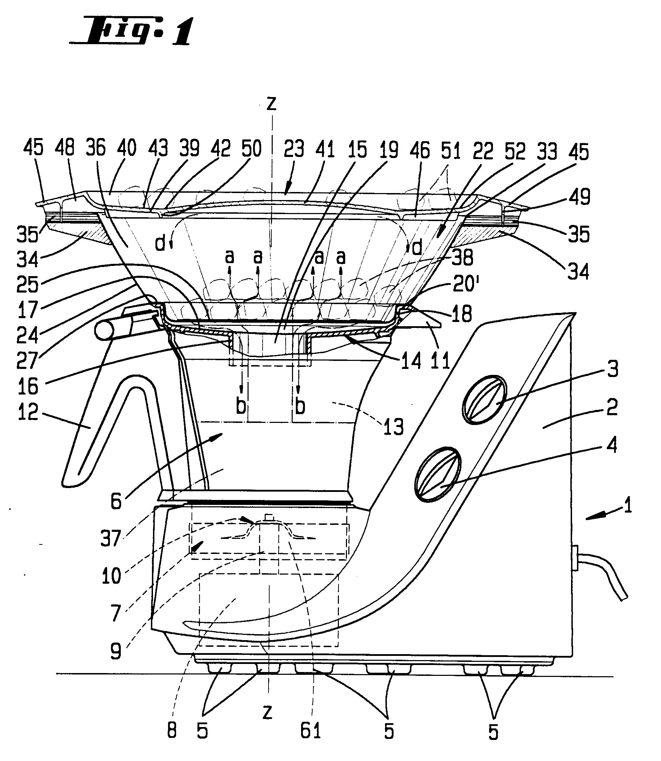

- Fig. 1O: die Vorderansicht des Deckels,

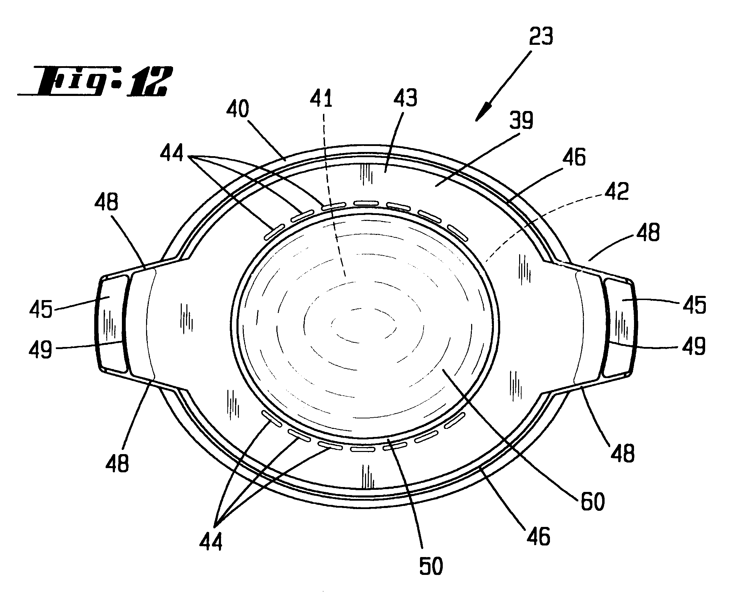

- Fig. 11: den Deckel in Draufsicht,
- Fig. 12: eine Unteransicht des Deckels,

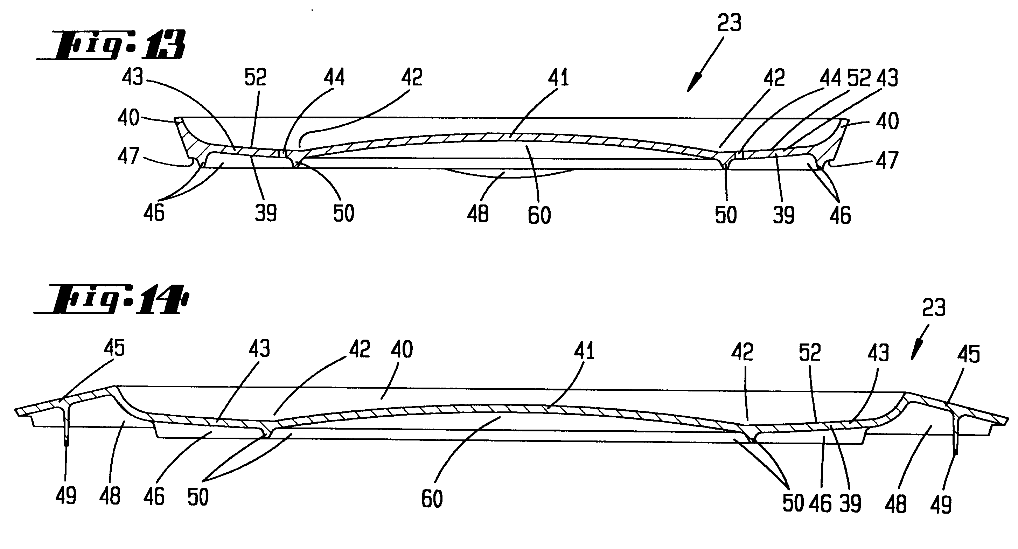

- Fig. 13: den Schnitt gemäß der Linie XIII-XIII in Fig. 11,

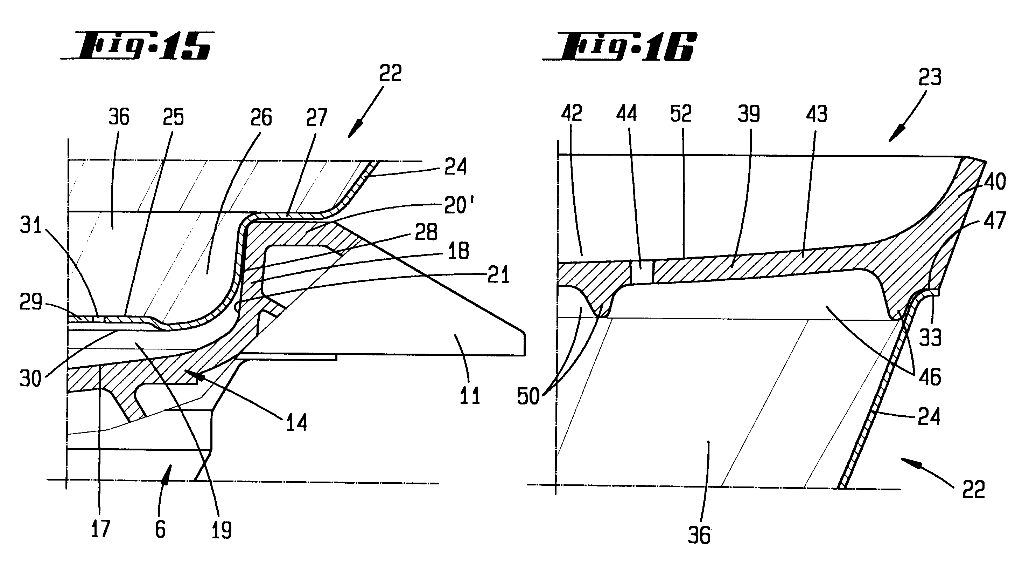

- Fig. 14: den Schnitt gemäß der Linie XIV-XIV in Fig. 11,

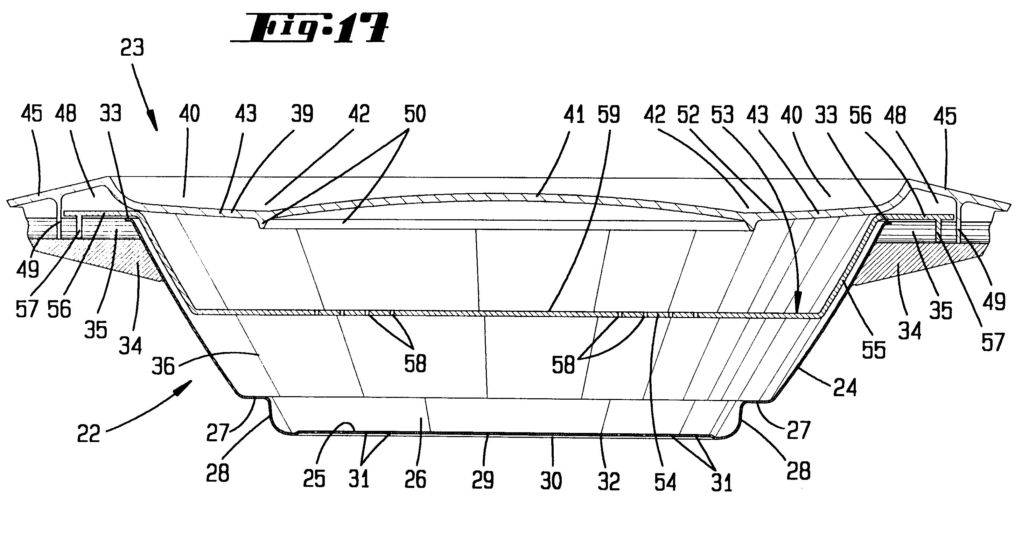

- Fig. 15: eine Ausschnittsvergrößerung der Fig. 1, den Auflagebereich des Aufsatzes auf dem Einsatzdeckel des Rührgefäßes zeigend,

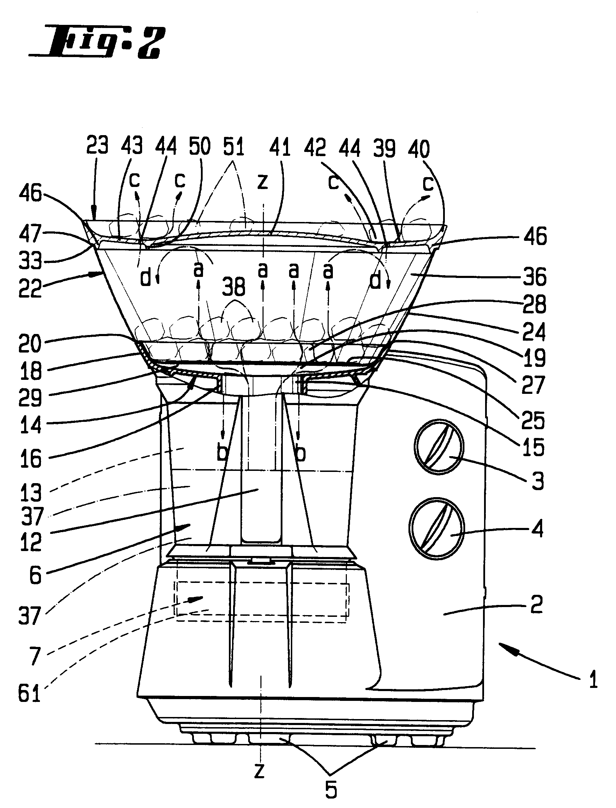

- Fig. 16: eine weitere Ausschnittsvergrößerung, jedoch die Fig. 2 betreffend, zur Darstellung einer Abdichtung zwischen dem Deckel und dem Aufsatz.

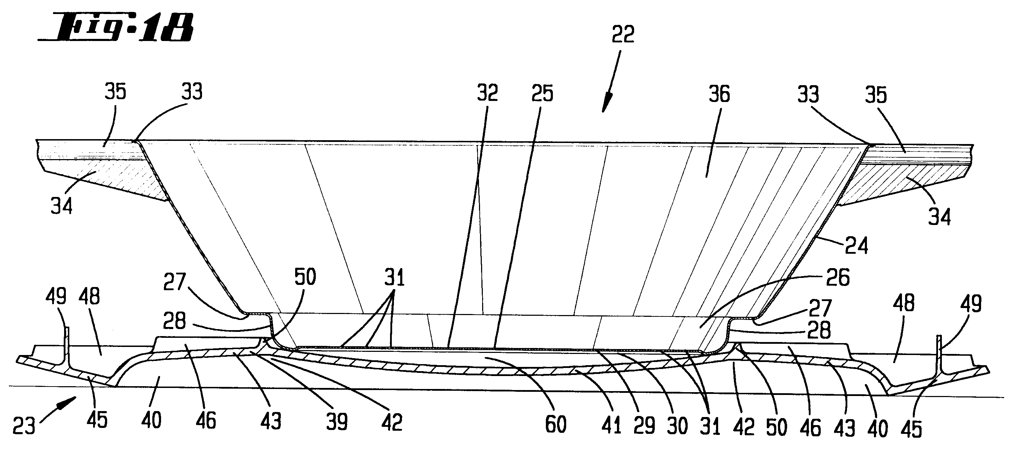

- Fig. 17: eine Einzeldarstellung des mittels des Deckels verschlossenen Aufsatzes, bei Einsatz eines Zwischeneinsatzes, in einer Längsschnittdarstellung,
- Fig. 18: eine weitere Längsschnittdarstellung, bei der der Aufsatz auf dem hier als Untersetzer dienenden, umgedreht angeordneten Deckel aufgesetzt ist,

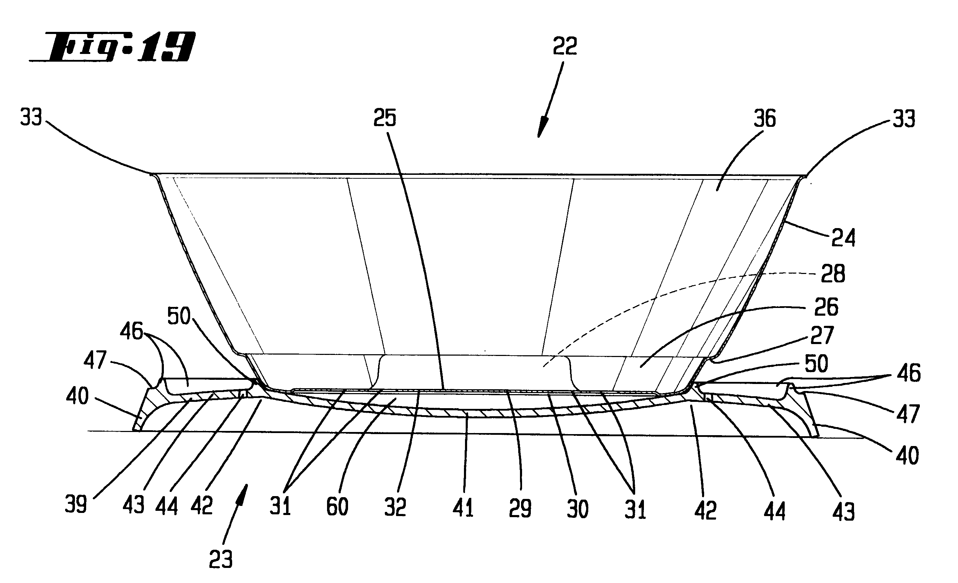

- Fig. 19: eine der Fig. 18 entsprechende Darstellung, jedoch in einem Querschnitt,
- Fig. 20: die Draufsicht auf einen Zwischeneinsatz, eine zweite Ausführungsform betreffend,

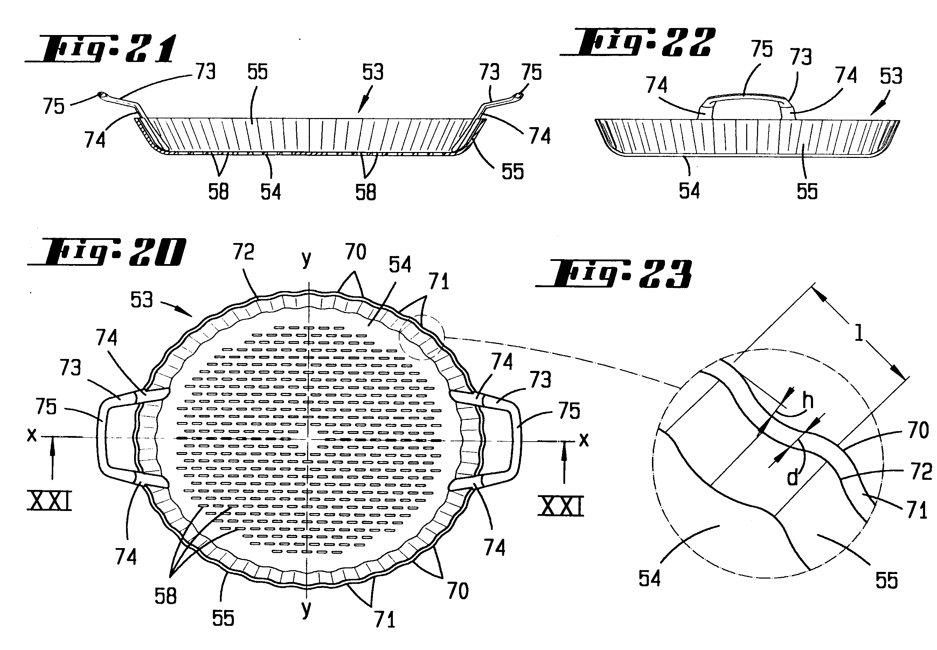

- Fig. 21: den Schnitt gemäß der Linie XXI-XXI in Fig. 20,

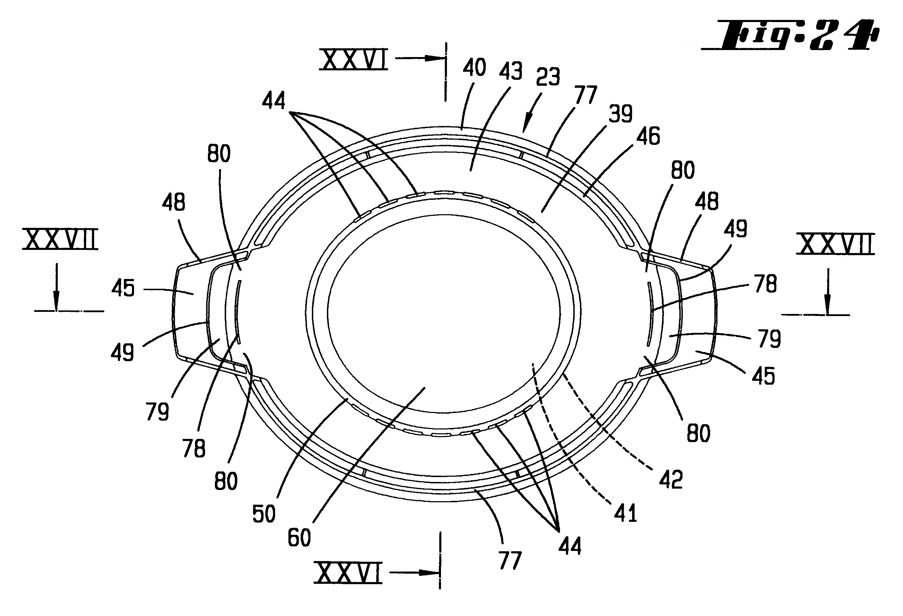

- Fig. 22: die Vorderansicht des Zwischeneinsatzes,
- Fig. 23: eine Ausschnittsvergrößerung aus Fig. 20,
- Fig. 24: eine der Fig. 12 entsprechende Unteransicht des Deckels, jedoch die zweite Ausführungsform betreffend,

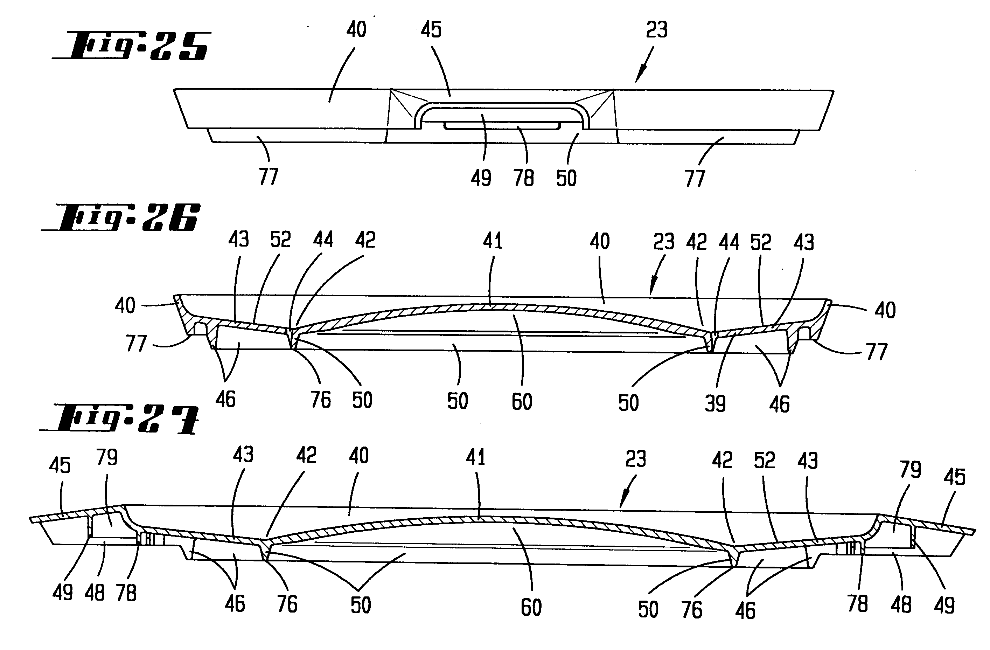

- Fig. 25: die Vorderansicht des Deckels,
- Fig. 26: den Schnitt gemäß der Linie XXVI-XXVI in Fig. 24,
- Fig. 27: den Schnitt gemäß der Linie XXVII-XXVII in Fig. 24,

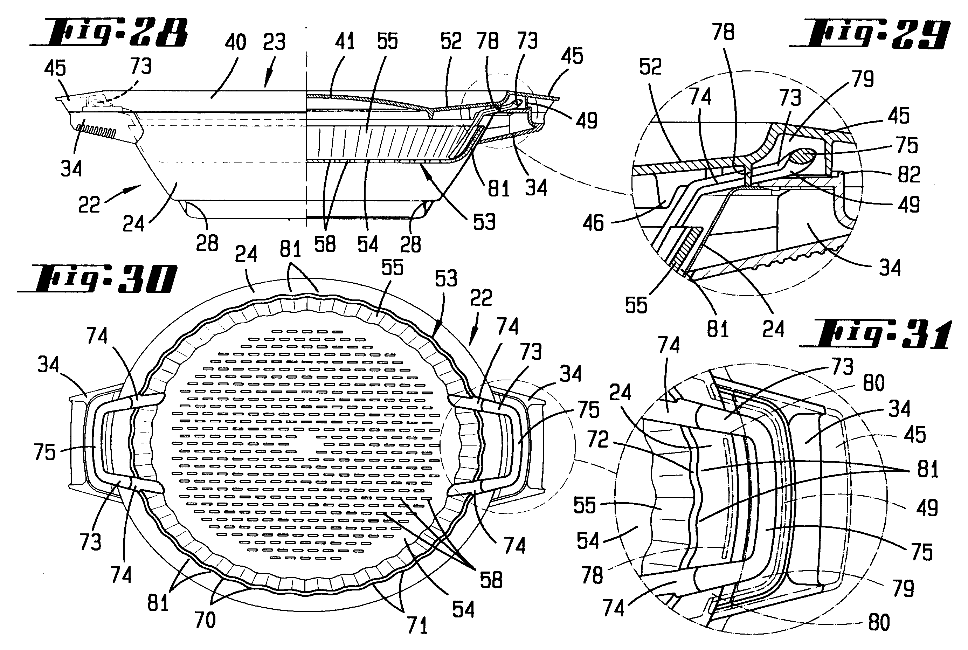

- Fig. 28: eine der Fig. 17 entsprechende Darstellung in einem Teilschnitt, gemäß der zweiten Ausführungsform,
- Fig. 29: eine Detailvergrößerung aus der Fig. 28,
- Fig. 30: eine Draufsicht auf den Aufsatz bei eingesetztem Zwischeneinsatz gemäß Fig. 28, jedoch bei abgenommenem Deckel,

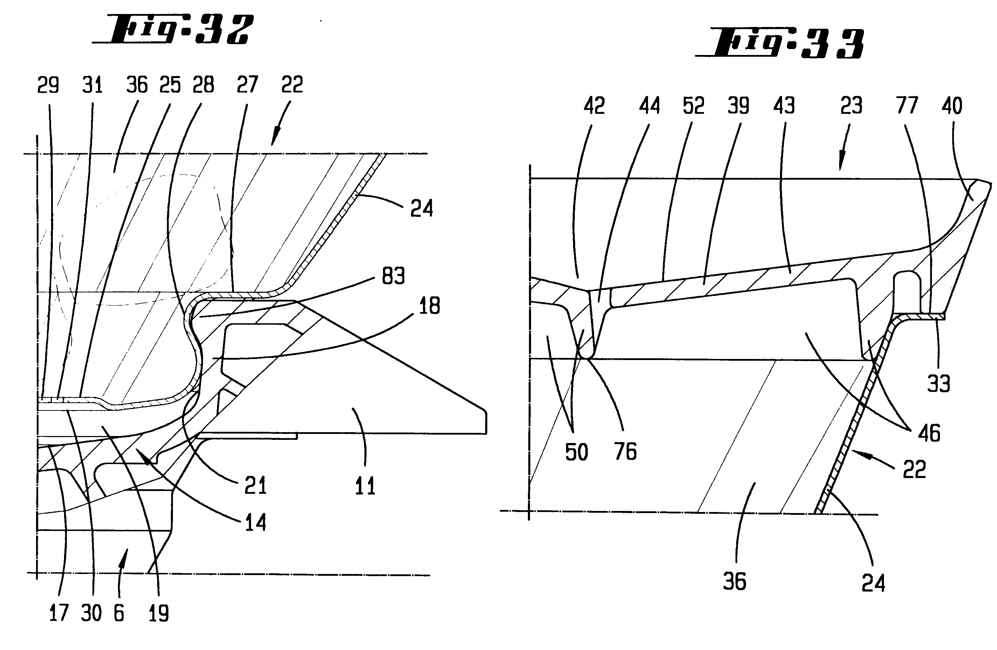

- Fig. 31: eine Detailvergrößerung aus der Fig. 30,
- Fig. 32: eine der Fig. 15 entsprechende Ausschnittsvergrößerung, die zweite Ausführungsform betreffend und
- Fig. 33: eine der Fig. 16 entsprechende Darstellung, gemäß dem zweiten Ausführungsbeispiel.

Die in den Fig. 1 bis 3 dargestellte Küchenmaschine 1 weist ein Gehäuse 2 auf, in welchem zwei Drehschalter 3, 4 angeordnet sind. Das Gehäuse 2 besitzt weiterhin unterseitig Abstellfüße 5.

Zur Lagerung eines Rührgefäßes 6 in der Küchenmaschine 1 ist diese mit einer nicht näher dargestellten Aufnahme 7 versehen. Ein in dem Gehäuse 2 angeordneter Antrieb 8, beispielsweise in Form eines Elektromotors, treibt über eine vertikal, koaxial zu einer Vertikalachse z der Küchenmaschine 1 ausgerichtete Antriebswelle 9 ein innerhalb des Rührgefäßes 6 im Bodenbereich angeordnetes Rührwerk 1O an, welches über eine Kupplungsanordnung mit der Antriebswelle 9 in kraftschlüssiger Verbindung steht. Das Rührwerk 1O ist in dem gezeigten Ausführungsbeispiel in bekannter Weise ausgebildet, in dem um 9O° versetzt angeordnete, abgekröpfte Messer über eine Schraubverbindung an der rührtopfseitigen Welle drehfest gelagert sind. Die Drehzahl des Rührwerkes 1O wird über den Drehschalter 4 eingestellt.

Das Rührgefäß 6 ist in seinem oberen, offenen Bereich oval ausgestaltet, wobei in Verlängerung der Längsachse x eine über den Rand des Rührgefäßes 6 hinausragende Ausgießnase 11 vorgesehen ist. Letztere weist bei in das Gehäuse 2 eingesetztem Rührgefäß 6 in Richtung auf den mit den Drehschaltern 3, 4 versehenen Gehäuseabschnitt. An dem der Ausgießnase 11 gegenüberliegenden Ende der Längsachse x ist das Rührgefäß 6 mit einem Kannengriff 12 versehen. Dieser Kannengriff 12 erstreckt sich über die gesamte Höhe des Rührgefäßes 6.

Der in dem Rührgefäß 6 gebildete Sudraum 13 ist von einem Einsatzdeckel 14 abgedeckt. Letzterer sitzt weitestgehend formschlüssig und dichtend auf dem oberen Rand des Rührgefäßes 6 auf. Der Einsatzdeckel 14 ist trichterförmig ausgebildet, wobei eine im wesentlichen zentral angeordnete Großöffnung 15 vorgesehen ist.

Wie aus Fig. 1 zu erkennen, ist die Großöffnung 15 des Einsatzdeckels 14 koaxial zur Vertikalachse z über dem Rührwerk 1O angeordnet. Die Wandung 16 der Großöffnung 15 erstreckt sich von einer Oberfläche 17 des Einsatzdeckels 14 ausgehend bis in den Sudraum 13 hinein.

Die Trichterform des Einsatzdeckels 14 ist dadurch gegeben, daß von der zentral angeordneten Großöffnung 15, welche kreisrund ausgebildet ist, ausgehend die Oberfläche 17 nach außen hin ansteigt. Randaußenseitig geht die Oberfläche 17 in einen hochgezogenen Umfangsrand 18 über, wobei letzterer zu seinem freien Ende hin nach außen geneigt ist. Hierdurch resultiert ein sich nach oben hin erweiterter Aufnahmeraum 19. Die nach oben gerichtete Fläche des Umfangrandes 18 ist als Deckelrand 2O bezeichnet.

Wie insbesondere aus Fig. 3 erkennbar, zeigt die Projektion des Einsatzdeckels 14 eine ovale Gestalt auf.

Auf der Längsachse x sind an dem Deckelrand 2O beidseitig der Querachse y Gegen-Registerflächen 21 ausgebildet. Diese erstrecken sich senkrecht zur Längsachse x. Erzielt sind diese Gegen-Registerflächen 21 durch ein Eindrücken des Umfangrandes 18 in den beiden durch die Längsachse x geschnittenen Bereichen, unter Beibehaltung des Deckelrandes 2O, welcher in diesem Bereich folglich breiter ausgebildet ist, als in den Bereichen zwischen den Gegen-Registerflächen 21. Die Breite des hier gebildeten Deckelrandes 2O' entspricht in etwa der Höhe der Gegen-Registerfläche 21, womit eine stufenartige Ausbildung gegeben ist.

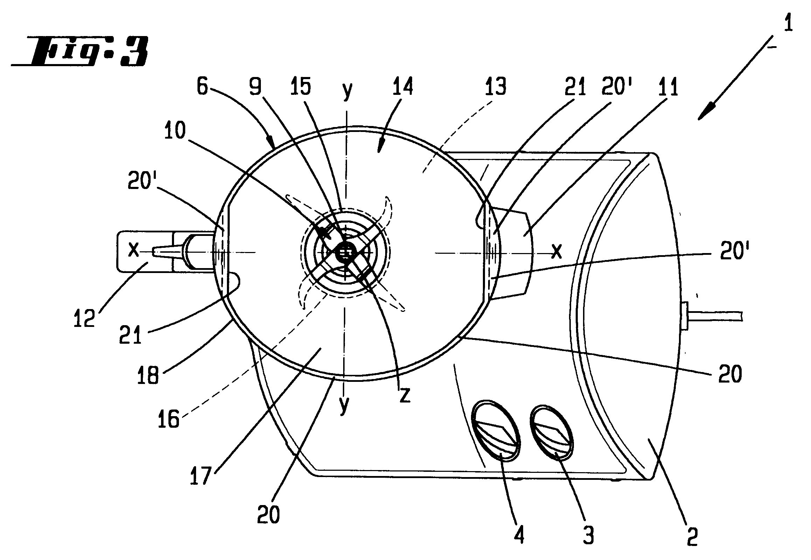

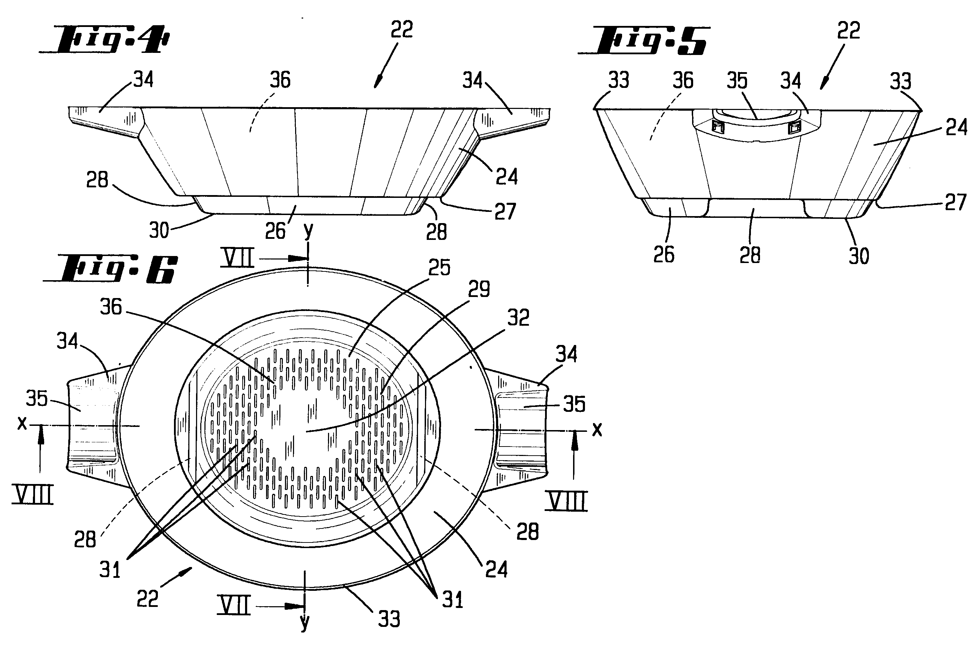

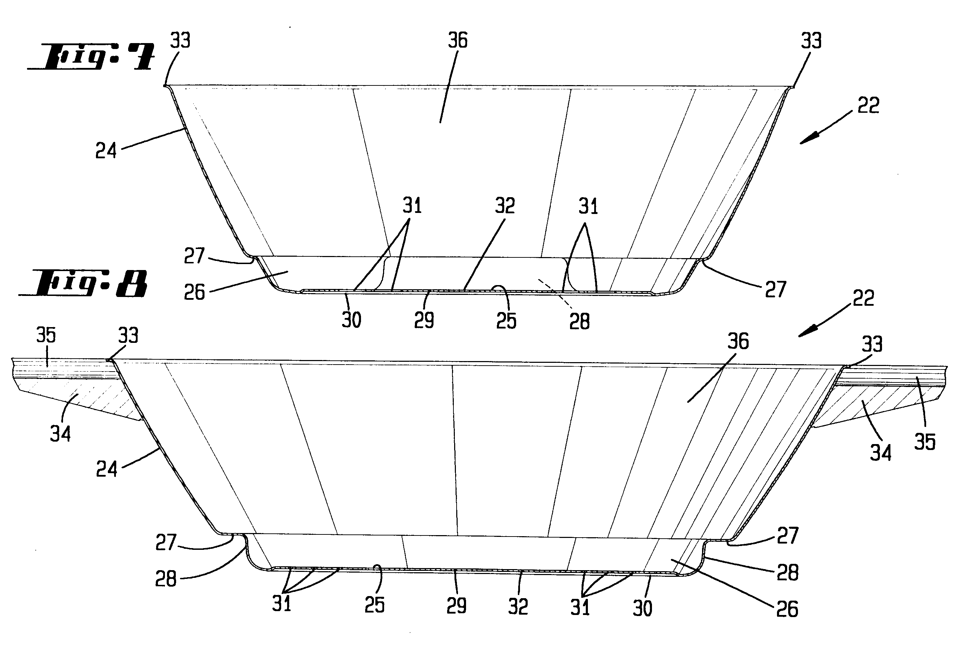

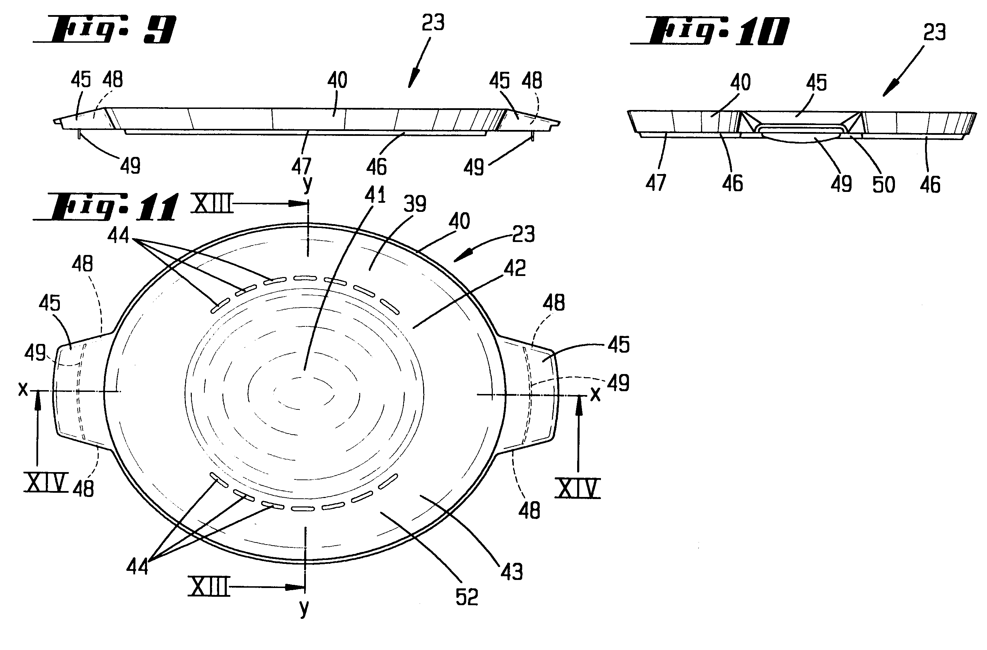

Auf dem Einsatzdeckel 14 ist ein mittels eines Deckels 23 abgedeckter Aufsatz 22 angeordnet, welcher Aufsatz 22 und Deckel 23 in den Fig. 1 bis 19 in einer ersten Ausführungsform dargestellt und nachfolgend beschrieben sind.

Der Aufsatz 22 weist im wesentlichen eine Kegelstumpfform auf, wobei sich die Aufsatzwandung 24 von einer ovalen Auflagefläche 25 ausgehend nach oben hin erweitert. Das Verhältnis von Längsachse x zur Querachse y der ovalen Auflagefläche 25 entspricht dem des Verhältnisses des Einsatzdeckels 14. In dem gezeigten Ausführungsbeispiel ist dies ein Verhältnis von ca. 1,2 : 1. Die Neigung der Aufsatzwandung 24 entspricht der Neigung des Umfangrandes 18 des Einsatzdeckels 14, hier ca. 45°. Die Höhe des Aufsatzes 22 ist so gewählt, daß diese etwa dem Radius auf der Längsachse x der Auflagefläche 25 entspricht.

Die Aufsatzwandung 24 besitzt in ihrem unteren Bereich einen verjüngten Aufsatzbereich 26, wobei die Höhe des Aufsatzbereiches 26 etwa einem Fünftel der Gesamthöhe des Aufsatzes 22 entspricht. Hierdurch ist eine Aufsatzschulter 27 gebildet, mit welcher sich bei auf dem Einsatzdeckel 14 aufgesetzten Aufsatz 22 letzterer auf dem Deckelrand 2O des Einsatzdeckels 14 abstützt. Die Außenkontur des Absatzbereiches 26 entspricht hierbei der Innenkontur des Umfangrandes 18 des Einsatzdeckels 14. In diesem Aufsatzbereich 26 ist der Aufsatz 22 auf seiner Längsachse x mit Registerflächen 28 versehen. Diese erstrecken sich entsprechend den Gegen-Registerflächen 21 des Einsatzdeckels 14 senkrecht zur Längsachse x beidseitig der Querachse y. Auch diese Registerflächen 28 sind durch Einziehungen der Aufsatzwandung 24 gebildet. Die Höhe der Registerflächen 28, welche senkrecht zur Auflagefläche 25 ausgerichtet sind, entspricht der Höhe des Aufsatzbereiches 26, welche wiederum eine kleinere Höhe aufweist als die der Gegen-Registerflächen 21 des Einsatzdeckels 14. Durch das Einziehen der Registerflächen 28 ist in diesem Bereich die Aufsatzschulter 27 vergrößert, welche bei auf dem Einsatzdeckel 14 gestellten Aufsatz 22 sich an den verbreiterten Deckelrandbereichen 2O' abstützen.

Bedingt durch diese Ausgestaltung der Registerflächen 28 und den mit diesen korrespondierenden Gegen-Registerflächen 21 des Einsatzdeckels 14 ist zum einen eine Orientierungshilfe für den Benutzer zum Aufsetzen des Aufsatzes 22 gegeben und zum anderen eine Verdrehsicherung des Aufsatzes 22 auf dem Einsatzdeckel 14.

Der die Auflagefläche 25 bildende Aufsatzboden 29 ist gegenüber einem umlaufenden Abstellrand 3O erhöht angeordnet. Das Maß dieser Erhöhung entspricht etwa der Materialstärke der Aufsatzwandung 24 bzw. des Aufsatzbodens 29.

Letzterer weist nahezu über die gesamte Auflagefläche 25 verteilt angeordnete Durchbrüche 31 auf. Lediglich im zentralen Bereich 32 der Auflagefläche 25 ist der Aufsatzboden 29 geschlossen, d.h. undurchbrochen ausgebildet. Dieser Bereich 32 entspricht etwa einem Viertel bis einem Sechstel der gesamten Auflagefläche 25. Die genannten Durchbrüche 31 sind als Längsschlitze ausgebildet, deren Breite in dem gezeigten Ausführungsbeispiel etwa 1 bis 1,5 mm und die Länge etwa 1O bis 12 mm entspricht. Die Ausrichtung der Durchbrüche 31 ist so gewählt, daß sie in Längserstreckung parallel zur Querachse y verlaufen.

An dem nach oben weisenden Ende ist die Aufsatzwandung 24 mit einem nach außen ragenden, horizontal verlaufenden Aufsatzrand 33 versehen.

Auf der Längsachse x, beidseitig der Querachse y sind an der Aufsatzwandung 24 Handgriffe 34 vorgesehen. Letzere weisen an ihrer Oberseite im Querschnitt kreisabschnittsförmig ausgebildete Mulden 35 auf.

Der durch die Aufsatzwandung 24 und den Aufsatzboden 29 nach oben hin offen gebildete Raum wird als Garraum 36 bezeichnet.

Ein in dem Rührgefäß 6 befindlicher Sud 37 gibt bedingt durch eine Aufheizung mittels einer durch den Drehschalter 3 einstellbaren Heizung 61 aromatisierte Dämpfe ab, welche durch die Großöffnung 15 aus dem Rührgefäß 6 nach oben hin austreten können. Nach Durchtritt des Aufnahmeraumes 19 ziehen diese Dämpfe durch die Durchbrüche 31 des Aufsatzbodens 29 und durchfluten den Garraum 36. Diese aromatisierten Dämpfe, welche in den Garraum 36 eintreten, sind in den Fig. 1 und 2 mit den Pfeillinien a schematisch dargestellt. Die in dem Garraum 36 auf der Auflage 25 aufliegenden Lebensmittel, insbesondere Gargut 38 werden durch die aromatisierten Dämpfe gedünstet. Hierbei entstehendes Kondensat und auch aus dem Gargut 38 austretende Feuchtigkeit kann durch die im Aufsatzboden 29 vorgesehenen Durchbrüche 31 zurück in das Rührgefäß 6 geführt werden. Nach Durchtritt durch die Durchbrüche 31 gelangen diese über die trichterförmige Ausbildung des Einsatzdeckels 14 in den Bereich der Großöffnung 15 und von dort in den Sudraum 13 (Pfeillinien b). Bedingt durch die koaxiale Anordnung entlang der Achse z der Großöffnung 15 zu dem Rührwerk 1O gelangen die zurückgeführten Kondensate bzw. die Feuchtigkeit in den direkten Einfluß des Rührwerkes 1O, womit die mit dem Aroma des Gargutes 38 versetzten zurückgeführten Feuchtigkeiten in optimaler Weise sofort in den Sud 37 eingerührt werden. Es erfolgt somit ein Austausch von Aromen zwischen dem Sud 37 und dem Gargut 38, ohne daß diese miteinander in direkten Kontakt geraten.

Durch die Anordnung eines geschlossenen Bereiches 32 der Auflagefläche 25 ist auch die Möglichkeit gegeben, kleinkörnige Gewürze oder dergleichen in den Garraum 36 einzulegen. Da diese durch die für diesen Einsatz zu groß gestalteten Durchbrüche 31 fallen würden, werden derartig kleine Gewürze oder dergleichen in dem zentralen, geschlossenen Bereich 32 angesiedelt. Die Gewürze werden auch hier von den aromatisierten Dämpfen umspült, wodurch das sich bildende Kondensat mit den Gewürzaromen angereichert wird. Wie bereits beschrieben, gelangt das Kondensat wieder zurück in das Rührgefäß 6 und wird hier unter den Sud 37 gemengt.

Unterstützt wird diese Wirkungsweise noch durch einen Einsatz des bereits erwähnten Deckels 23. Mittels diesem wird der Garraum 36 überdeckt.

Wie in einer Draufsicht des Deckels 23 in Fig. 11 zu sehen ist, weist der Deckel 23 eine gleiche dem Aufsatz 22 und dem Einsatzdeckel 14 entsprechende Kontur auf. Die projizierte Fläche ist gleichfalls oval ausgebildet, wobei auch hier, wie zuvor bei dem Aufsatz 22 beschrieben, das Verhältnis von Längsachse x zur Querachse y dem Verhältnis der Achsen bei dem Einsatzdeckel 14 entspricht. Die Außenabmaße des Deckels 23 in seinem unteren Bereich entsprechen denen des Aufsatzes 22 im Bereich seines Aufsatzrandes 33.

Der Deckel 23 besteht im wesentlichen aus einem Deckelboden 39, der randseitig in einen Umfangsrand 40 übergeht. Letzterer ist entsprechend der Aufsatzwandung 24 des Aufsatzes 22 nach außen hin geneigt. Der Deckel 23 ist hierdurch wannenartig ausgebildet.

Weiterhin besitzt der Deckel 23 einen inneren, nach oben gewölbten, linsenförmigen Mittelbodenbereich 41 auf, welcher Teil des Deckelbodens 39 ist. Ausgehend von dem Fußbereich 42 des Mittelbodenbereiches 41 erstreckt sich ein Abschnitt 43 des Deckelbodens 39 ansteigend bis hin zum Umfangsrand 4O.

Nahe dem Fußbereich 42 zugeordnet sind in dem ansteigenden Abschnitt 43 Durchbrechungen 44 vorgesehen. Wie aus Figur 11 zu erkennen, sind diese Durchbrechungen 44 beidseitig der Längsachse x jeweils über einen Teilbereich des Fußbereiches 42 angeordnet. Es ist beidseitig der Längsachse x jeweils eine Reihe von Durchbrechungen 44 vorgesehen, wobei sich jede Reihe entlang des jeweiligen Fußbereichabschnittes erstreckt. Bezogen auf den gesamten Umfang des Fußbereiches 42 ist in dem gezeigten Ausführungsbeispiel etwa die Hälfte des Fußbereiches 42 mit den Durchbrechungen 44 versehen. Letztere sind sowohl in Längs- als auch in Quererstreckung etwa doppelt so groß wie die Durchbrüche 31 des Aufsatzes 22.

In gleicher Weise wie der Aufsatz 22 ist auch der Deckel 23 beidseitig seiner Querachse y in Verlängerung der Längsachse x mit an dem Umfangsrand 40 außen angeordneten Handgriffen 45 versehen. Diese sind so ausgebildet, daß bei einem Aufsetzen des Deckels 23 auf den Aufsatz 22 diese Handgriffe 45 die des Aufsatzes 22 überdecken.

Der Deckel 23 weist weiterhin unterseitig einen umlaufenden Dichtungsvorsprung 46 auf, zur dichtenden Zusammenwirkung mit dem Aufsatzrand 33 des Aufsatzes 22. Dieser Dichtungsvorsprung 46 erstreckt sich beidseitig der Längsachse x entlang des Umfangrandes 40, mit Abstand zu diesem, wodurch eine unterseitige Deckelauflageschulter 47 gebildet ist. In den Bereichen der Handgriffe 45 geht der Dichtungsvorsprung 46 in unterseitig der Handgriffe 45 angeordnete Dichtungsschultern 48 über. Letztere sind entlang der beidseitig der Längsachse x angeordneten Außenkanten der Handgriffe 45 vorgesehen.

Die beiden Dichtungsschultern 48 eines jeden Handgriffes 45 sind mittels eines kreisabschnittsförmigen Dichtungsstreifens 49 miteinander verbunden, wobei letzterer etwa mittig an der Unterseite des Handgriffes 45, bezogen auf die in Längsachsenrichtung, angeformt ist. Wie insbesondere aus dem Längsschnitt in Fig. 14 zu erkennen, ragen die Dichtungsstreifen 49 nach unten hin über den Dichtungsvorsprung 46 hinaus.

Des weiteren besitzt der Deckel 23 einen seiner Außenkontur entsprechenden, ovalen Abtropfvorsprung 50 auf. Letzter ist im Bereich des Fußbereiches 32 des Aufsatzbodens 29 an dessen Unterseite vorgesehen. Die bereits erwähnten Durchbrechungen 44 treten außerhalb des durch den Abtropfvorsprung 5O gebildeten Mittelbereiches durch den Deckelboden 39. Die projizierte Fläche des durch den Abtropfvorsprung 50 gebildeten Bereiches entspricht in etwa der der projizierten Fläche des inneren, nach oben gewölbten Mittelbodenbereiches 41.

Bei einem Aufsetzen des Deckels 23 auf den Aufsatz 22 ergibt sich eine abdichtende Überdeckung des Garraumes 36. Der Deckel 23 liegt mit seiner Deckelauflageschulter 47 auf dem Aufsatzrand 33 auf und dichtet in den handgriffreien Bereichen mittels des sich an der Innenfläche der Aufsatzwandung 24 anliegenden Dichtungsvorsprunges 46 ab. Im Bereich der übereinanderliegenden Handgriffe 34 und 45 erfolgt die Abdichtung mittels der Dichtungsschultern 48 und der Dichtungsstreifen 49. Die Dichtungsschultern 48 stützen sich an den Oberseiten der Handgriffe 34 entlang ihrer Außenkanten ab. In die Mulden 35 der Handgriffe 34 treten die entsprechend ausgeformten Dichtungsstreifen 49 ein. Es ist somit eine umlaufende Dichtung zur dichtenden Zusammenwirkung von Deckel 23 und Aufsatz 22 gegeben.

Bedingt durch den nunmehr abgedeckten Garraum 36 ist ein Dünsten von in dem Garraum 36 eingelegtem Gargut 38 optimiert. Die eintretenden aromatisierten Dämpfe können nunmehr nicht unkontrolliert nach außen entweichen. Es ist lediglich ein kontrollierter Austritt durch die Durchbrechungen 44 des Deckels 23 möglich. Durch die geringe Anzahl der Durchbrechungen 44 ist ein gemäßigter Durchtritt von Dämpfen gegeben. Dieser Durchtritt kann jedoch noch zum Dünsten von weiteren Lebensmitteln 51, welche auf den als eine Auflagefläche 52 ausgebildeten Deckelboden 39 gelegt sind, genutzt werden (s. Pfeillinien c).

Die in dem Garraum 36 ansteigenden Dämpfe schlagen sich an der Unterseite des Deckelbodens 39 nieder, kondensieren dort und laufen, bedingt durch die gewölbte Ausgestaltung des Mittelbodenbereiches 41 und die ansteigenden Abschnitte 43 in Richtung auf den Abtropfvorsprung 50 (s. Pfeillinien d). Hier erfolgt ein Abtropfen des Kondensats zurück in den Garraum 36, gezielt in Richtung auf den mit den Durchbrüchen 31 versehenen Bereich, von wo aus, wie bereits bechrieben, das Kondensat in das Rührgefäß 6 geleitet wird. Auch beim Dünsten von auf dem Deckel 23 angeordneten Lebensmitteln 51 kann dort entstehendes Kondensat bzw. dort entstehende Feuchtigkeit durch die Durchbrechungen 44 zurückgeführt werden. Auch hier erfolgt ein gezieltes Abtropfen des Kondensats in Richtung auf den mit den Durchbrüchen 31 versehenen Bereich der Auflagefläche 25. Dies ist gleichfalls durch die Ausbildung des erhöhten Mittelbodenbereiches in Kombination mit den ansteigenden Abschnitten 43 ermöglicht. Hier ist es vorteilhaft, daß die Durchbrechungen 44 im Übergangsbereich zwischen dem Mittelbodenbereich 41 und den ansteigendem Abschnitt 43 angeordnet sind.

Wie aus Fig. 17 ersichtlich, kann zwischen dem Aufsatz 22 und dem Deckel 23 ein Zwischeneinsatz 53 einer ersten Ausführungsform angeordnet sein. Letztere weist eine dem Aufsatz 22 entsprechende Form auf, besitzt jedoch lediglich etwa die Hälfte der Höhe des Aufsatzes 22. Ausgehend von einem Zwischeneinsatzboden 54 erstreckt sich eine nach oben hin erweiterende Zwischeneinsatzwandung 55, deren Neigung der des Aufsatzes 22 entspricht. An dem oberen Ende ist die Zwischeneinsatzwandung 55 mit einem nach außen ragenden Ringkragen 56 versehen. Letzterer besitzt unterseitig an den im eingesetztem Zustand den Handgriffen 34 des Aufsatzes 22 zugewandten Bereichen, nahe den freien Enden Stützstege 57.

Der Zwischeneinsatzboden 54 ist in gleicher Weise wie der Aufsatzboden 29 mit Durchbrüchen 58 versehen, unter Belassung eines mittleren, geschlossenen Bereiches 59.

Der Zwischeneinsatz 53 ist derart zwischen dem Deckel 23 und dem Aufsatz 22 angeordnet, daß sich der Rand des Zwischeneinsatzes 53 innerhalb des umlaufenden Dichtvorsprunges des Deckels 23 befindet. Der Zwischeneinsatz 53 stützt sich hierbei mittels der Stützstege 57 auf den Handgriffen 34 des Aufsatzes 22 ab und zwar im Bereich der Mulden 35. Der Ringkragen 56 ist hierbei von dem Handgriff 45 des Deckels 23 überdeckt, wobei der Dichtungsstreifen 49 den Aufnahmeraum für den Ringkragen 56 nach außen hin abdichtet.

Durch diese Ausgestaltung ist es ermöglicht, drei Schichten von Lebensmitteln oder dergleichen gleichzeitig zu dünsten. Zu den beiden zuvor genannten Schichten - Aufsatzboden 29 und Deckelboden 39 - wird durch Einsatz des Zwischeneinsatzes 53 eine weitere, eine dritte Schicht gebildet. Die aromatisierten, aufsteigenden Dämpfe, durchtreten sowohl die Durchbrüche 31 des Aufsatzbodens 29 als auch die Durchbrüche 58 des Zwischeneinsatzbodens 54. Auch ist bei der Nutzung eines Zwischeneinsatzes 53 die Rückführung von Kondensat oder entstehende Feuchtigkeit gegeben. Es ist hierbei auch denkbar, den Boden 54 des Zwischeneinsatzes 53 entsprechend dem Deckelboden 39 auszugestalten, um eine verbesserte Rückführung von Kondensat oder dergleichen zu gewährleisten.

Der beschriebene Deckel 23 kann auch als Untersetzer für den Aufsatz 22 genutzt werden, beispielsweise bei einem Abstellen des Aufsatzes 22 auf eine Arbeitsfläche. Hierzu wird der Deckel 23 in umgekehrter Form, d.h. mit der ursprünglichen Unterseite nach oben, auf die Arbeitsfläche oder dergleichen gelegt. Der ringförmige Abtropfvorsprung dient nunmehr als Arretierungsvorsprung für den Aufsatz 22. Die Außenkontur des Bodenbereiches des Aufsatzes 22 entspricht hierbei der Innenkontur des Abtropfvorsprunges 50.

Wird der Aufsatz 22 in der beschriebenen Weise auf den Deckel 23 gestellt, so stützt sich der Aufsatz 22 mittels seines Abstellrandes 30 an der ursprünglichen Unterseite des Mittelbodenbereiches 41, nahe dem Abtropfvorsprung 50 ab. Ein seitliches Verrücken des Aufsatzes 22 ist durch die ringförmige Umklammerung des Bodenbereiches mittels des Abtropfvorsprunges 50 verhindert. Der durch die Erhöhung des Mittelbodenbereiches 41 nunmehr gebildete Hohlraum unterhalb des Aufsatzbodens 29 ist begrenzt durch den ringförmigen Abtropfvorsprung 50 und bildet eine Abtropfwanne 60 aus. In dieser kann noch aus dem Aufsatz 22 durch den Aufsatzboden 29 durchtretende Feuchtigkeit gesammelt werden.

Etwaiges von dem Aufsatzrand 33 abtropfendes Kondensat sammelt sich in dem Bereich zwischen dem ringförmigen Abtropfvorsprung 50 und dem umlaufenden Dichtungsvorsprung 46, wobei die ansteigenden Abschnitte 43 des Deckels 23 ein Ablaufen dieses Kondensats durch die Durchbrüche 44 des Deckels 23 verhindern, da die Neigung des Abschnittes 43 in Richtung auf den umlaufenden Dichtungsvorsprung 46 zeigt.

In den Fig. 20 bis 33 ist eine zweite Ausführungsform des Zwischeneinsatzes 53, des Deckels 23 und des Aufsatzes 22 dargestellt.

Der Zwischeneinsatz 53 besteht im wesentlichen entsprechend dem ersten Ausführungsbeispiel aus einem Zwischeneinsatzboden 54, von welchem ausgehend sich eine nach oben hin erweiternde Zwischeneinsatzwandung 55 erstreckt. Die Neigung der Zwischeneinsatzwandung 55 entspricht der des Aufsatzes 22.

Im Unterschied zum ersten Ausführungsbeispiel ist die Zwischeneinsatzwandung 55 wellenförmig gestaltet, wobei sich die Wellenberge 70 und Wellentäler 71 entlang der Höhenerstreckung der geneigten Zwischeneinsatzwandung 55 erstrecken. Hieraus ergibt sich ein wellenförmig gestalteter Rand 72. Wie insbesondere aus Fig. 20 zu erkennen, erstreckt sich die Wellenform über den gesamten Umfang des Randes 72, wobei eine Wellenhöhe h etwa der Wandstärke d der Zwischeneinsatzwandung 55 entspricht. Weiter ist die Wellenform derart bemessen, daß eine Wellenlänge l etwa dem vier- bis fünffachen der Wandstärke d entspricht (vergl. hierzu Fig. 23). In der gezeigten Ausführungsform ergibt sich somit eine gleichmäßige Wellenform der Zwischeneinsatzwandung 55 bzw. des Randes 72, wobei über den gesamten Umfang 35 bis 45, bevorzugt 40 Wellen vorgesehen sind.

Der Zwischeneinsatzboden 54 ist entsprechend dem ersten Ausführungsbeispiel mit Durchbrechungen 58 versehen.

Der Zwischeneinsatzboden 54 ist entsprechend dem Aufsatz 22 oval ausgebildet, wobei das Verhältnis von Längsachse x zur Querachse y etwa 1,2 : 1 entspricht. Im Bereich der Längsachse x ist dem Zwischeneinsatz 53 beidseitig je ein U-förmig ausgebildeter Handgriff 73 angeformt. Letztere werden mittels ihrer U-Schenkel 74 innenseitig an der Zwischeneinsatzwandung 55 materialeinheitlich angeformt. Diese U-Schenkel 74 erstrecken sich, von der Zwischeneinsatzwandung 55 ausgehend, über diese sowohl in vertikaler als auch in horizontaler Richtung hinaus. Endseitig sind die U-Schenkel 74 zur Bildung des Handgriffes 73 mit einem U-Steg 75 verbunden.

In den Fig. 24 bis 27 ist der Aufsatzdeckel 23 in einer zweiten Ausführungsform dargestellt. Dieser unterscheidet sich von dem zuvorbeschriebenen im wesentlichen dadurch, daß die Durchbrechungen 44 teilweise in die Kontur des Abtropfvorsprunges 50 eingelassen sind, dies derart, daß der Kamm 76 des Abtropfvorsprunges 50 auch im Bereich der Durchbrechungen 44 unbeeinflußt ist. Die Anordnung ist hierbei so getroffen, daß die Durchbrechungen 44 im Fußbereich des Mittelbodenbereiches 41, jedoch auf der dem Mittelbodenbereich 41 abgewandten Seite des Abtropfvorsprunges 50 vorgesehen sind.

Der Deckel 23 weist ebenfalls unterseitig einen umlaufenden Dichtungsvorsprung 46 auf zur dichtenden Zusammenwirkung mit dem Aufsatzrand 33 des Aufsatzes 22. Dieser Dichtungsvorsprung 46 erstreckt sich beidseitig der Längsachse x entlang des Umfangrandes 40, mit Abstand zu diesem, wobei im Bereich des Umfangrandes 40 eine Auflagerippe 77 gebildet ist, mit welcher sich der Deckel 23 auf dem Aufsatzrand 33 abstützt. Entsprechend dem ersten Ausführungsbeispiel wird der Dichtungsvorsprung 46 im Bereich der Handgriffe 45 in Form von randabschnittsförmigen Dichtungsstreifen 49 fortgeführt. Im Bereich eines jeden Handgriffes 45 ist nach innen versetzt und beabstandet zu den Dichtungsstreifen 49 eine Aufnahmeraum-Abschlußwand 78 vorgesehen, zur Bildung eines Aufnahmeraumes 79. Jede Aufnahmeraum-Abschlußwand 78 weist zwei Durchbrechungen 80 auf zur Einschachtelung des Handgriffes 73 des Zwischeneinsatzes 53.

Die Zusammenbaustellung von Aufsatz 22, Deckel 23 und Zwischeneinsatz 53 ist in den Fig. 28 bis 31 dargestellt. Der Zwischeneinsatz 53 wird derart in den Aufsatz 22 eingesetzt, daß die Handgriffe 73 des Zwischeneinsatzes 53 sich auf den Handgriffen 34 des Aufsatzes 22 abstützen, dies im Bereich ihrer U-Schenkel 74. Der Zwischeneinsatzboden 54 ist, wie aus Fig. 28 zu erkennen, etwa auf halber Höhe des Aufsatzes 22 angeordnet. Bedingt durch die wellenförmige Ausgestaltung der Zwischeneinsatzwandung 55 ergeben sich Durchströmöffnungen 81 im Bereich zwischen den Wellentälern 71 und der Innenseite der Aufsatzwandung 24. Hierdurch bedingt kann aufsteigender Dampf auch an den Außenseiten vorbei in den oberen Bereich des Aufsatzes 22 gelangen und dort das auf dem Zwischeneinsatz 53 befindliche Gargut umströmen.

Bei einem Aufsetzen des Deckels 23 auf den Aufsatz 22 ergibt sich eine abdichtende Überdeckung des Garraumes 36. Der Deckel 23 liegt mittels seiner Auflagerippe 77 auf dem Aufsatzrand 33 auf und dichtet in den handgrifffreien Bereichen mittels des sich an der Innenfläche der Aufsatzwandung 24 anliegenden Dichtungsvorsprunges 46 ab. Im Bereich der übereinanderliegenden Handgriffe 34 und 45 erfolgt eine labyrinthartige Abdichtung. Der Dichtungsstreifen 49 des Deckels 23 liegt hierzu auf dem Handgriff 34 des Aufsatzes 22 auf, wobei oberseitig an dem Handgriff 34 eine Abschlußrippe 82 vorgesehen ist, zur Außenanlage an den Dichtungsstreifen 49 in der Zusammenbaustellung (vergl. Fig. 29). Die Aufnahmeraum-Abschlußwand 78 hingegen stützt sich auf dem Aufsatzrand 33 ab. Der zwischen der Aufnahmeraum-Abschlußwand 78 und dem Dichtungsstreifen 49 gebildete Aufnahmeraum 79 ist somit nahezu vollständig geschlossen. Die Durchbrechungen 80 der Aufnahmeraum-Abschlußwand 78 werden hierbei nahezu vollständig vom Querschnitt des jeweiligen U-Schenkels 74 des Zwischeneinsatz-Handgriffes 73 ausgefüllt.

Bedingt durch diese Ausgestaltung treten aufsteigende heiße Dämpfe nicht direkt gegen die Flächen der Zwischeneinsatz-Handgriffe 73. Vielmehr treten die aufsteigenden Dämpfe zunächst gegen die Aufnahmeraum-Abschlußwand 78 und gelangen nur in geringen Mengen durch die Durchbrechungen 80 in den Aufnahmeraum 79, in welchem der U-Steg 75 des Zwischeneinsatz-Handgriffes 73 einliegt. Dementsprechend werden die Handgriffe des Deckels 23 nicht stark erhitzt.

Weiter sind durch diese Ausgestaltung die Handgriffe 73 des Zwischeneinsatzes 53, bedingt durch deren U-förmige Ausgestaltung, gefangen.

Die Unterseiten der Aufsatzhandgriffe 34 sind profiliert, um ein Abrutschen bei einem Anheben des Aufsatzes 22 zu verhindern.

Die Registrierflächen 28 des in dem zweiten Ausführungsbeispiel gezeigten Aufsatz 22 sind als muldenartige Hinterschneidungen ausgebildet. Diese wirken mit einem als Gegen-Registerfläche 21 ausgebildeten, nasenartigen Registervorsprung 83 im Bereich des Einsatzdeckels 14 zusammen. Letzterer ist innenseitig des Umfangrandes 18 im Bereich der Ausgießnase 11 angeformt. Der Aufsatz 22 wird in Form einer Hebelbewegung auf den Einsatzdeckel 14 aufgesetzt, wobei der nasenartige Registervorsprung 83 in die muldenartige Hinterschneidung der Registerfläche 28 eintaucht. Diese Ausgestaltung soll ein unbeabsichtigtes Abheben des Aufsatzes 22 von dem Einsatzdeckel 14 verhindern.

Gegenstand einer Weiterbildung der Erfindung ist auch eine Küchenmaschine, bei welcher der Aufsatzboden 29 einen zentralen, undurchbrochenen Bereich 32 aufweist.

Gegenstand einer Weiterbildung der Erfindung ist auch eine Küchenmaschine, bei welcher der Deckel 23 einen inneren, nach oben gewölbten Mittelbodenbereich 41 aufweist.

Gegenstand einer Weiterbildung der Erfindung ist auch eine Küchenmaschine, bei welcher die Durchbrechungen 44 einem Fußbereich 42 des Mittelbodenbereiches 41 zugeordnet sind.

Gegenstand einer Weiterbildung der Erfindung ist auch eine Küchenmaschine, bei welcher der Deckel 23 randumfangseitig, ausgehend vom Fußbereich 42 einen ansteigenden Abschnitt 43 aufweist, der in einen hochgezogenen Umfangsrand 40 übergeht.

Gegenstand einer Weiterbildung der Erfindung ist auch eine Küchenmaschine, bei welcher der Deckel 23 unterseitig einen inneren, zu dem Dichtungsvorsprung 46 beabstandeten Abtropfrand 50 in Form einer umlaufenden Rippe ausbildet.

Gegenstand einer Weiterbildung der Erfindung ist auch eine Küchenmaschine, bei welcher die Durchbrechungen 44 des Deckels 23 teilweise in die Kontur der Rippe eingelassen sind.

Gegenstand einer Weiterbildung der Erfindung ist auch eine Küchenmaschine, bei welcher der Abtropfrandkamm 76 auch im Bereich der Durchbrechungen 44 unbeeinflußt ist.

Gegenstand einer Weiterbildung der Erfindung ist auch eine Küchenmaschine, bei welcher ein Rand des Zwischeneinsatzes 53 sich innerhalb des umlaufenden Dichtungsvorsprunges 46 des Deckels 23 befindet.

Gegenstand einer Weiterbildung der Erfindung ist auch eine Küchenmaschine, bei welcher eine Wellenhöhe h etwa einer Wandstärke d und eine Wellenlänge l etwa dem vier- bis fünffachen der Wandstärke d entspricht.

Gegenstand einer Weiterbildung der Erfindung ist auch eine Küchenmaschine, bei welcher an dem Handgriff 34 des Aufsatzes 22 eine Abschlußrippe 82 ausgebildet ist zur Außenanlage an den Dichtungsstreifen 49.

Gegenstand einer Weiterbildung der Erfindung ist auch eine Küchenmaschine, bei welcher eine Registerfläche 28 stufenartig ausgebildet ist.

Gegenstand einer Weiterbildung der Erfindung ist auch eine Küchenmaschine, bei welcher eine Registerfläche 28 sich senkrecht zur Hauptachse x des Aufsatzes 22 erstreckt.

Gegenstand einer Weiterbildung der Erfindung ist auch eine Küchenmaschine, bei welcher die Registerflächen 28 an dem Aufsatz 22 als muldenartige Hinterschneidungen ausgebildet sind.

Gegenstand einer Weiterbildung der Erfindung ist auch eine Küchenmaschine, bei welcher zumindest eine Gegen-Registerfläche 21 als ein nasenartiger Registervorsprung 83 ausgebildet ist.

Gegenstand einer Weiterbildung der Erfindung ist auch ein Verfahren, bei welchem die Dämpfe nach einem ersten Durchsetzen des Gargutes 38 gegen einen im wesentlichen geschlossenen Aufsatzdeckel 23 geleitet werden zur Einleitung der Kondensation.

## Patentansprüche

1. Küchenmaschine (1) mit einem Rührgefäß (6) und einem Antrieb (8) für ein Rührwerk (10) in dem Rührgefäß (6), wobei das Rührgefäß (6) in seinem unteren Bereich aufheizbar ist, wobei das Rührgefäß (6) durch einen Einsatzdeckel (14) abgedeckt ist, dadurch gekennzeichnet, daß auf dem Einsatzdeckel (14) ein Aufsatz (22) angeordnet ist, der einen durchbrochenen Boden (29) aufweist zum Zubereiten durch Dünsten von Lebensmitteln (38), wobei die Durchbrüche (31) in einer Gargut-Auflage des Aufsatzbodens (29) ausgebildet sind und Kondensat oder entstehende Feuchtigkeit in das Rührgefäß (6) zurückgeleitet wird.

2. Küchenmaschine nach Anspruch 1, dadurch gekennzeichnet, daß zwischen dem Aufsatz (22) und dem Rührgefäß (6) ein Einsatzdeckel (14) angeordnet ist, der eine im wesentlichen zentrale Großöffnung (15) aufweist.

3. Küchenmaschine nach einem oder mehreren der vorhergehenden Ansprüche, dadurch gekennzeichnet, daß der Aufsatz (22) mit einem Deckel (23) überdeckt ist, wobei der Deckel (23) Durchbrechungen (44) aufweist und eine Auflagefläche (52) für Gargut (51) ausgebildet ist.

4. Küchenmaschine nach einem oder mehreren der vorhergehenden Ansprüche, dadurch gekennzeichnet, daß der Deckel (23) unterseitig einen umlaufenden Dichtungsvorsprung (46) aufweist, zur dichtenden Zusammenwirkung mit einem Rand (33) des Aufsatzes (22).

5. Küchenmaschine nach einem oder mehreren der vorhergehenden Ansprüche, dadurch gekennzeichnet, daß zwischen dem Aufsatz (22) und dem Deckel (23) ein Zwischeneinsatz (53) angeordnet ist.

6. Küchenmaschine nach einem oder mehreren der vorhergehenden Ansprüche, dadurch gekennzeichnet, daß der Zwischeneinsatz (53) Durchströmöffnungen (81) in bezug auf die Innenfläche des Aufsatzes (22) beläßt.

7. Küchenmaschine nach einem oder mehreren der vorhergehenden Ansprüche, dadurch gekennzeichnet, daß der Rand (72) des Zwischeneinsatzes (53) wellenförmig gestaltet ist derart, daß sich die Wellenberge (70) und Wellentäler (71) im wesentlichen vertikal erstrecken.

8. Küchenmaschine nach einem oder mehreren der vorhergehenden Ansprüche, dadurch gekennzeichnet, daß ein Teilabschnitt des Dichtungsvorsprunges (46) als ein Dichtungsstreifen (49) ausgebildet ist und daß der Deckel (23) nach innen versetzt und beabstandet zu dem Dichtungsstreifen (49) eine Aufnahmeraum-Abschlußwand (78) aufweist, welche Durchbrechungen (80) besitzt zur Einschachtelung des Griffes (73) des Zwischeneinsatzes (53).

9. Küchenmaschine nach einem oder mehreren der vorhergehenden Ansprüche, dadurch gekennzeichnet, daß der Aufsatz (22) Registerflächen (28) ausbildet, die mit entsprechenden Gegen-Registerflächen (21) an dem Einsatzdeckel (14) zusammenwirken.

10. Verfahren zum Zubereiten von Speisen in einer als Küchenmaschine (1) ausgebildeten Vorrichtung nach Anspruch 1, welche ein in einem Rührgefäß (6) aufgenommenes Rührwerk (10) und ein Heizwerk (61) zum Garen der Speisen aufweist, dadurch gekennzeichnet, daß die aus dem Rührgefäß (6) aufsteigenden Dämpfe durch einen Einsatzdeckel (14) hindurch in ein Aufsatzgefäß (22) geleitet werden unter Umströmung von in dem Aufsatzgefäß (22) aufgenommenem Gargut (38) und in Form von Kondensat nach weiterer Durchsetzung des Gargutes (38) in umgekehrter Richtung zurück in das Rührgefäß (6) geleitet werden.

## Claims

1. Kitchen machine (1) with a stirrer vessel (6) and a drive (8) for an agitator (10) in the stirrer vessel (6), wherein the stirrer vessel (6) in its lower region can be heated up, wherein the stirrer vessel (6) is covered by an inserted lid (14), characterised in that on the inserted lid (14) is arranged a top piece (22) which has a perforated bottom (29) for preparation by steaming of foods (38), wherein the perforations (31) are formed in a cooking material support of the bottom (29) of the top piece and condensate or moisture formed is conducted back into the stirrer vessel (6).

2. Kitchen machine according to claim 1, characterised in that between the top piece (22) and the stirrer vessel (6) is arranged an inserted lid (14) which comprises an essentially central large opening (15).

3. Kitchen machine according to one or more of the preceding claims, characterised in that the top piece (22) is covered with a lid (23), wherein the lid (23) comprises perforations (44) and a supporting surface (52) for cooking material (51) is formed.

4. Kitchen machine according to one or more of the preceding claims, characterised in that the lid (23) comprises on the lower side a peripheral sealing projection (46), for sealing cooperation with an edge (33) of the top piece (22).

5. Kitchen machine according to one or more of the preceding claims, characterised in that between the top piece (22) and the lid (23) is arranged an intermediate insert (53).

6. Kitchen machine according to one or more of the preceding claims, characterised in that the intermediate insert (53) leaves throughflow openings (81) in relation to the inner surface of the top piece (22).

7. Kitchen machine according to one or more of the preceding claims, characterised in that the edge (72) of the intermediate insert (53) is undulating such that the wave peaks (70) and wave troughs (71) extend essentially vertically.

8. Kitchen machine according to one or more of the preceding claims, characterised in that a section of the sealing projection (46) is constructed as a sealing strip (49) and in that the lid (23) comprises, offset inwardly and at a distance from the sealing strip (49), a holding chamber end wall (78) which has perforations (80) for nesting of the handle (73) of the intermediate insert (53).

9. Kitchen machine according to one or more of the preceding claims, characterised in that the top piece (22) forms register surfaces (28) which cooperate with corresponding counter-register surfaces (21) on the inserted lid (14).

10. Method for the preparation of foods in an apparatus constructed as a kitchen machine (1) according to claim 1 which comprises an agitator (10) held in a stirrer vessel (6) and a heating mechanism (61) for cooking the foods, characterised in that the vapours rising from the stirrer vessel (6) are conducted through an inserted lid (14) into a top vessel (22), flowing around cooking material (38) held in the top vessel (22), and in the form of condensate after further passing through the cooking material (38) are conducted in the reverse direction back into the stirrer vessel (6).

## Revendications

1. Robot ménager (1), comportant un récipient à agitation (6) et un entraînement (8) pour un agitateur (10) prévu dans le récipient à agitation (6), le récipient à agitation (6) étant susceptible d'être chauffé dans sa zone inférieure, le récipient à agitation (6) étant recouvert par un couvercle à insérer (14), caractérisé en ce que, sur le couvercle à insérer (14), est disposé un élément rapporté ou chapeau (22) présentant un fond perforé (29), pour la cuisson à l'étuvée de d'aliments (38), en ce que les ouvertures traversantes (31) sont réalisées dans un support pour aliments à cuire du fond d'appui (29), et la condensation ou l'humidité produite étant réintroduite dans le récipient à agitation (6).

2. Robot ménager selon la revendication 1, caractérisé en ce qu'un couvercle à insérer (14), présentant une ouverture large (15) sensiblement centrale, est disposé entre l'élément rapporté (22) et le récipient à agitation (6).

3. Robot ménager selon l'une ou plusieurs des revendications précédentes, caractérisé en ce que l'élément rapporté (22) est recouvert d'un couvercle (23), le couvercle (23) présentant des ouvertures traversantes (44) et une surface de dépose (42) pour des aliments à cuire (51).

4. Robot ménager selon l'une ou plusieurs des revendications précédentes, caractérisé en ce que le couvercle (23) présente en face inférieure une saillie périphérique d'étanchéité (46), pour coopérer de façon étanche avec un bord (33) de l'élément rapporté (22).

5. Robot ménager selon l'une ou plusieurs des revendications précédentes, caractérisé en ce qu'un élément inséré intermédiaire (53) est disposé entre l'élément rapporté (22) et le couvercle (23).

6. Robot ménager selon l'une ou plusieurs des revendications précédentes, caractérisé en ce que l'élément inséré intermédiaire (53) laisse subsister des ouvertures de passage d'écoulement (81) par rapport à la surface intérieure de l'élément rapporté (22).

7. Robot ménager selon l'une ou plusieurs des revendications précédentes, caractérisé en ce que le bord (72) de l'élément inséré intermédiaire (53) est de configuration ondulée, de manière que les sommets d'ondulation (70) et les vallées d'ondulation (71) s'étendent sensiblement verticalement.

8. Robot ménager selon l'une ou plusieurs des revendications précédentes, caractérisé en ce qu'un tronçon partiel de la saillie d'étanchéité (46) est réalisée sous la forme d'une bande d'étanchéité (49) et en ce que le couvercle (23) est décalé vers l'intérieur et présente, à distance de la bande d'étanchéité (49), une paroi de fermeture d'espace de logement (78) comportant des ouvertures traversantes (80) en vue de réaliser l'emboîtement de la poignée (73) de l'élément inséré intermédiaire (53).

9. Robot ménager selon l'une ou plusieurs des revendications précédentes, caractérisé en ce que l'élément rapporté (22) constitue des surfaces de positionnement (28), coopérant avec des contre-surfaces de positionnement (21) correspondantes réalisées sur le couvercle à insérer (14).

10. Procédé de préparation de plats de nourriture, dans un dispositif réalisé sous forme de robot ménager (1) selon la revendication 1, présentant un agitateur (10) logé dans un récipient à agitation (6) et un organe de chauffage (61) destiné à cuire les aliments, caractérisé en ce que les vapeurs montant hors du récipient à agitation (6) sont dirigées, en traversant un couvercle à insérer (14), dans un élément rapporté (22), avec un écoulement contournant les aliments à cuire (38) logés dans l'élément rapporté (22) et étant dirigées en retour, sous forme de condensat, dans le récipient à agitation (6), après avoir de nouveau traversé les aliments à cuire (38) en sens inverse.
